# EUROPEAN PATENT APPLICATION

(11) **EP 1 889 972 A1**
(43) Date of publication of application: **20.02.2008**
(21) Application number: 07252579.3
(22) Date of filing: 26.06.2007
(51) Int. Cl.: D21C 5/02, D21H 11/00, D21H 11/04, D21H 11/12, D21H 11/14, D21H 23/04, D21H 27/00, D21B 1/00

(54) **Core board**

(30) Priority: 26.06.2006 IN MU10002006
(71) Applicant: Biltube India Limited, Pune 411 016 (IN)
(72) Inventor: Dharamsi, Biren Narendra, Pune 411 009 (IN); Bhandari, Prakash Harakchand, Anand Park, Aundh Pune 411 007 (IN); Bhandari, Kiran Harakchand 605 A & B, Wing C, Anand Park, Aundh Pune 411 007 (IN)
(74) Representative: Ablett, Graham Keith

(57) **Abstract**

The present invention concerns a process for making a core board / cone board / core liner paper, particularly kraft paper, in which fibres are pulped along with water, starch gel and other compounds in a pulper in a batch process, cleaning, agitating, screening on paper machine and calendaring to obtain monolithic core Paper. According to the present invention is characterized in that the core Board manufactured in accordance with this invention offers higher grammage monolithic board of up to 1500 grams per square meter in single layer, higher Ply Bond from 280 up to 1500 jules/m², higher horizontal and vertical compression strengths for spiral and parallel winding applications.

## Description

### FIELD OF INVENTION

This invention relates to a novel core board / cone board / core liner and a process for making the core board / cone board / core liner.

Particularly this invention relates to a core board / cone board / core liner made of paper, particularly kraft paper, and a process for making thereof.

### BACKGROUND OF THE INVENTION

Hereinafter, use of the term core board, includes the use of expression cone board.

Paper manufactured by the conventional process is more commonly known as Kraft paper and the same can be produced up to a maximum of 250 GSM. Anything above 250 GSM is normally known as Kraft board and is normally manufactured by adhering / laminating 2 or more sheets of Kraft paper together to achieve the desired GSM of Kraft Board. Kraft Board has variety of applications including making of packaging containers, cones, spools, tubes among many others. Although the desired thickness and GSM can be achieved by multiple layers of Kraft paper adhered / laminated together, the products made from such Kraft Boards have the following key limitations:
1. Very low Ply bond strength.
2. Products made from Kraft Board have very low vertical and horizontal compression strengths.

### OBJECT OF THE INVENTION

The object of the invention is to provide a process for manufacturing of a novel monolithic Core Paper (below 250 GSM) and Core Board (above 250 GSM and up to 1500 GSM).

Another object of the invention is to provide the core board which can be used for all applications where currently the Kraft paper and Kraft board are used.

Yet another object of the invention is to provide the core board with unique advantages of the product having significantly greater strengths.

Yet another object of the invention is to provide unique manufacturing process leading to a monolithic Core Paper and Core Board having very high specific plybond strengths from 280 j/m2 to 1500j/m2.

Yet another object of the invention is to provide the core board so manufactured, have more preferably, significant value when used in the manufacture of high grade Yarn bobbins, Yarn Tubes, Paper Cones, Paper Cores and Film Cores, where the compression strengths and stability are very critical and are required to be very high. The tubes or cores act as a carrier to various products like synthetic yarns, cotton yarn, paper, film, etc.

Yet another object of the invention is to provide tubes or yarn bobbins made out of this unique monolithic Core Board that can perform on very high speed winders of as high as 6000 MPM and can sustain very high centrifugal pressure created during synthetic yarn winding, maintain dimensional stability of tubes, protect from transit damages and offer higher recyclability.

Yet another object of the invention is to provide the paper cores made out of this Core Board provide exceptional beam strength, lowest shrinkage and minimal bending and ovality across the length.

### SUMMARY OF THE INVENTION

According to this invention, therefore there is provided a process for making a core board / cone board / core liner paper, particularly kraft paper, comprising the following steps,
a) Pulping fibres along with water, starch gel and pH adjusting compound in a pulper in a batch process to obtain a pulp;
b) removing the plastic and metal contaminants with water from the pulp in a decontaminator to obtain a first cleansed pulp;
c) stirring the clean pulp in a storage chest maintaining uniform consistency to obtain a first homogenised pulp;
d) passing the first homogenised pulp tangentially through High /Low Density cleaner and through Turbo separator to remove the heavier and lighter impurities and to obtain a second cleansed pulp;
e) stirring the separated pulp in a storage chest and agitating the uniform pulp in a vertical and horizontal Chest agitator to obtain a second homogenised pulp;
f) screening the agitated pulp through primary pressure screen for eliminating sand particles and recover the fibre pulp;
g) screening the rejected pulp in step h through secondary pressure screen remove the unwanted material and recover the fibre pulp;
h) screening the rejected pulp coming from step e and f through a Vibrating Screen to recover the fibre pulp;
i) passing the recovered pulp through thickener with starch gel to dehydrate the pulp stock and increase the consistency and to obtain a thickened pulp;
j) stirring the thickened pulp in a storage chest with a retention aid and a sizing agent maintaining uniform consistency to obtain a uniform pulp;
k) agitating the uniform pulp in a vertical and horizontal Chest agitator to obtain a agitated pulp;
l) passing the agitated pulp through refiner to increase the degree SR of the pulp and to obtain a refined pulp;
m) stirring the refined pulp in a storage chest maintaining uniform consistency to obtain a uniform pulp;
n) agitating the uniform pulp in a vertical and horizontal Chest agitator to obtain a agitated pulp;
o) passing the agitated pulp through Consistency Regulator and Controller (CRC) to control the consistency and maintain the uniform consistency against set point and to obtain a Consistent pulp;
p) stirring the refined pulp in a machine chest maintaining uniform consistency to obtain a uniform pulp;
q) agitating the uniform pulp in a vertical and horizontal Chest agitator to obtain a agitated pulp;
r) passing the agitated pulp through constant level box to maintain constant flow of pulp to fan pump;
s) smoothening the lumps present in the pulp by passing through Medium consistency vertical centrifugal outward flow type pressure screen to obtain a pulp slurry;
t) spreading the pulp slurry evenly on to the wire part consisting of six parts through Head Box to dewater the pulp and to obtain the paper web;
u) pressing the paper web on paper machine through the nip of two rolls running under pressure to obtain the dehydrated and compact wet paper;
v) drying the dehydrated and compact wet paper gradually in drying section with steam shower to obtain the dried paper;
w) Calendaring the dried paper to achieve the surface finish and obtain a uniformly thick paper.

In accordance with one embodiment of the invention, the fibres consists of at least one fibrous material selected from a group of fibrous materials consisting of Virgin Wood Pulp, Bamboo pulp, Hardwood, Softwood, Jungle wood, Cotton yarn, Hosiery cutting, wax paper, grease proof paper, rice straw, wheat straw, husk, sawai grass, Bleached pulp, Unbleached pulp, Double Sorted OCC (Old Corrugated Cartons), Recovered Kraft (Old Corrugate Cartons) Paper, Straw Board, Chip Board, Bagasse, Jute pulp, Flax pulp, Hemp pulp, Sisal pulp, Rags (used textiles), Laminated Paper, Tetra pack cartons/sheets pre-use, Tetra pack cartons post-use, New Double Lined Kraft Corrugated Cuttings (NDLK), Brown (Mill Board), Grey board, Carbon paper, Ribbed kraft, Manila paper, Color paper, Road Sweep, Sack kraft, Sand Paper, Tissue Paper, Mix Waste, White Ledger, Computer printouts, Office Record/Paper, Notebooks, Old News Print, Sorted Graphic Paper, White blank, Coated Groundwood, Printed Bleached Board cuttings, Manifold pre-consumer, Coated book stock, Mixed Paper, Box Board Cuttings, Magazines, Hard white envelop cuttings, White woodfree shavings, Hard white shavings, Unprinted Bleached Board, Ledger paper, Security paper, Currency paper, Azure wove Paper, Cheque paper and Bond paper.

In accordance with another embodiment of the invention, the water is added to maintain the consistency of the pulp at 2%-30%.

In accordance with another embodiment of the invention, the Degree SR (Fiber Freeness) is maintained between 10 and 40 in the pulper for GSM range of more than 250 (Core Board) and between 20 and 55 in the pulper for GSM range of less than 250 (Core Board).

In accordance with another embodiment of the invention, the Degree SR (Fiber Freeness) is maintained between 45 and 75 at the Head box for GSM range of more than 250 (Core Board) and between 40 and 80 at the Head box for GSM range of less than 250 (Core Board).

In accordance with another embodiment of the invention, the pulping process carried out for the period in the range of 2 minutes to 120 minutes.

In accordance with another embodiment of the invention, the pulper consists of at least one pulper selected from a group of pulpers consisting of High Consistency Pulper, Medium Consistency Pulper, Low Consistency pulper, Horizontal pulper, Vertical pulper, Batch type pulper and Continuous pulper.

In accordance with another embodiment of the invention, the consistency in storage chest is ranging from 3% to 10%.

In accordance with another embodiment of the invention, the storage chest having an agitator consisting of aerofoil type propellers.

In accordance with another embodiment of the invention, screening using Primary Pressure screen done at operating consistency up to 5%.

In accordance with another embodiment of the invention, thickening done Input consistency of up to 3.0% and output consistency of up to 7.0%.

In accordance with another embodiment of the invention, the starch gel consists of mixture made by mixing at least two compounds selected from a group of compounds consisting of Starch, Silicates including Magnesium silicate, Sodium silicate, calcium silicate, Potassium Silicate, Urea, Melamine Formaldehyde, Resorcinol Formaldehyde, Sodium Benzoate, HCL, Eco gel solution, Defoaming agents (Formaldehyde , Aluminum stearate, n-Butoxypolyoxyethylene polyoxypropylene glycol, Butyl stearate, Copolymer condensates of ethylene oxide and propylene oxide, Cottonseed & soybean fatty acids, Decanoic Acid, Dimethylpolysiloxane, polyoxyethylene 40 monostearate, Polysorbate 60, propylene glycol alginate, silicon dioxide, sorbitan monostearate, aluminum stearate, butyl stearate, BHA, BHT, calcium stearate, fatty acids, hydroxylated lecithin, isopropyl alcohol, magnesium stearate, mineral oil, petrolatum, Petroleum waxes, Oxystearin, Polyethylene glycol, Polyoxyethylene (600) dioleate, Polyoxyethylene (600) mono-ricinoleate, potassium stearate, propylene glycol mono & diesters of fats and fatty acids, tallow - hydrogenated, oxidized, or sulfated; hydrogenated tallow alcohol. n-Butoxypolyoxyethylene, polyoxypropylene glycol formaldehyde, sodium polyacrylate, synthetic petroleum wax, oleic acid from tall oil fatty acids, Ethylene oxide polymer, alkyl adduct, phosphate ester, a-Hydro-omega-hydroxy-poly (oxyethylene) poly (oxypropy lene) (minimum 15 moles) poly (oxyethylene) block co-polymers, Hydroxylated lecithin, Isopropanol, isopropyl alcohol, Magnesium stearate, Monoester of alpha -hydro -omega -hydroxy -poly (oxyethylene)poly (oxypropylene) poly (oxyethylene) ((minimum 15 moles) blocked copolymer derived from low erucic acid rapeseed oil, Oleic acid, Palmitic acid, Polyethylene glycol, Polyoxyethylene (40) monostearate, Polypropylene glycol (Molecular weight 1200-3000), Polysorbate 60 (Polyoxyethylene (20) sorbitan mono-stearate), Polysorbate 65 (Polyoxyethylene (20) sorbitan tristearate), Polysorbate 80 (Polyoxyethylene (20) sorbitan monooleate), Silicon dioxide, Sorbitan monostearate, Tallow, hydrogenated, oxidized or sulfated), deaerators (Ethylene oxide polymer, alkyl adduct, phosphate ester, Fatty acids, Formaldehyde (paraformaldehyde), a-Hydro-omega-hydroxy-poly (oxyethylene) poly (oxypropy lene) (minimum 15 moles) poly (oxyethylene) block co-polymers, Hydroxylated lecithin, Isopropanol, isopropyl alcohol, Lecithin, hydroxylated lecithin, Magnesium stearate, Petroleum hydrocarbons (Synthetic isoparaffinic), Petroleum hydrocarbons, odorless, light, Polyethylene glycol (400) dioleate, Polypropylene glycol (Molecular weight 1200-3000), Polysorbate 65 (Polyoxyethylene (20) sorbitan tristearate), Polysorbate 80 (Polyoxyethylene (20) sorbitan monooleate), Polysorbate 80 (Polyoxyethylene (20) sorbitan monooleate), Soybean oil fatty acids, hydroxylated), Aqueous Emulsions(Ethoxylated mono- and di- glycerides), Synthetic Oils(Polyalpha-olefin, Synthetic esters), Mineral Oils (white Mineral oil), Dyes(Acridine , Anthraquinone , Arylmethane, Azo, Diazonium, Nitro , Nitroso, Phthalocyanine, Quinone-Imine, Tetrazolium, Thiazole, Xanthene), Pigments (Alizarin, Alizarin Crimson, Gamboge, Indigo, Indian Yellow, Cochineal Red, Tyrian Purple, Rose madder, Carbon pigments: Carbon Black, Ivory Black, Vine Black, Lamp Black, Cadmium pigments: cadmium pigments, Cadmium Green, Cadmium Red, Cadmium Yellow, Cadmium Orange, Iron oxide pigments: Caput Mortuum, oxide red, Red Ochre, Sanguine, Venetian Red, Mars Black, Chromium pigments: Chrome Green, Chrome Yellow, Cobalt pigments: Cobalt Blue, Cerulean Blue, Cobalt Violet, Aureolin, Lead pigments: lead white, Naples yellow, Cremnitz White, red lead, Copper pigments: Paris Green, Verdigris, Viridian, Titanium pigments: Titanium White, Titanium Beige, Ultramarine pigments: Ultramarine, Ultramarine Green Shade, French Ultramarine, Mercury pigments: Vermilion, Zinc pigments: Zinc White, Clay earth pigments: Raw Sienna, Burnt Sienna, Raw Umber, Burnt Umber, Yellow Ochre, Organic: Pigment Red 170, Phthalo Green, Phthalo Blue, Prussian blue, Quinacridone Magenta.), Potato, Corn, Guar gum, Tapioca, Wheat, Rice, Cassava, Sago, Tamarind seed, British gums (a brownish substance, very soluble in cold water, formed by heating dry starch at a temperature of about 600°F. It corresponds, in its properties, to dextrin, and used, in solution, as a substitute for gum in stiffening goods), Casein, Acrylic based Synthetic Adhesive, Polyvinyl Acetate, Dextrin, cationic polymers(polyaminoalkyl (meth)acrylate, polyvinylpyridinium halide, polydiallylammonium halide; reacted polymers, such as polyaminomethyl acrylamide, polyvinylimidazoline, chitosan; and condensation polymers, such as ionenes, epoxyamines), Polyvinylamine, Vegetable gums(chelated agar, gum arabic and microcrystalline cellulose, gum arabic (acacia gum), guar gum (guar flour), agar (agar-agar), carrageenan gum (alpha, kappa and all other types), karaya gum (sterculia gum; India tragacanth, kadaya gum), gum ghatti, locust agar, algin, pectin, xanthan gum, locust bean gum, gum tragacanth, tamarind gum, pectin derivatives including both low- and high-methoxyl pectin; alginates such as propylene glycol alginate; cellulose derivatives such as microcrystalline cellulose, methylcellulose, sodium carboxymethyl cellulose, carboxymethylcellulose, hydroxypropyl cellulose, hydroxypropyl methyl cellulose, and sodium hydroxymethyl cellulose; carboxymethyl locust bean gum; gellan gum; carboxymethyl guar gum), Locust bean gum, Polyacrylamide Resins, Polyvinylformamide (PVF) / Polyvinylamine Resins (PVAm), Melamine-Formaldehyde Resins, Urea-Formaldehyde Resins, Epoxidised Polyamide Resins, Glyoxalated Polyacrylamide Resins, Polyethylenimine (PEI), Polyvinylamines, Polyisocyanate, and Dialdehyde starch.

In accordance with another embodiment of the invention, the mass of Starch gel ranges from 5% to 35%.

In accordance with another embodiment of the invention, the process for making starch gel, comprising the following steps,
a) Adding predetermined amount of starch and water in a steam jacketed SS vessel having an agitator and agitating to obtain homogenized starch solution;
b) Adding 5%-30% of gelling solution in homogenized starch solution with continuous stirring to obtain a starch gel solution;
c) Heating the starch gel solution at the temperature between 40 - 50 °C for 30 minutes followed by increasing the temperature between 55 - 65° till the mixture gets partially gelatinized.
d) The gelling solution is a mix of 200-800 kgs of Silicates, 5-30 kgs of strengthening agent like Urea, 5-35 kgs of Formalin, 0.5-12 kgs of HCL homogenized with the help of stirrer at 30-65° Celsius.

In accordance with another embodiment of the invention, the gelling solution consists of at least two compounds selected from a group of compounds consisting of Silicates, strengthening agent (Alkline solution of Sodium Silicate Ratio 1:2.05 (Na2o : Sio2)), urea, Formalin and HCL.

In accordance with another embodiment of the invention, the gelling solution preferably consists of 200-800 kgs Silicates, 5-30 kgs strengthening agent, 5-35 kgs Formalin and 0.5-12 kgs HCL.

In accordance with another embodiment of the invention, the pH adjusting compound consists of at least one compound selected from a group of compounds consisting of Aluminum Sulphate Ferric Liquid, Rosin, Calcium carbonate, and Caustic soda.

In accordance with another embodiment of the invention, the retention aid is Krofta.

In accordance with another embodiment of the invention, the sizing agent is Rosin.

### DESCRIPTION OF THE FIGURES

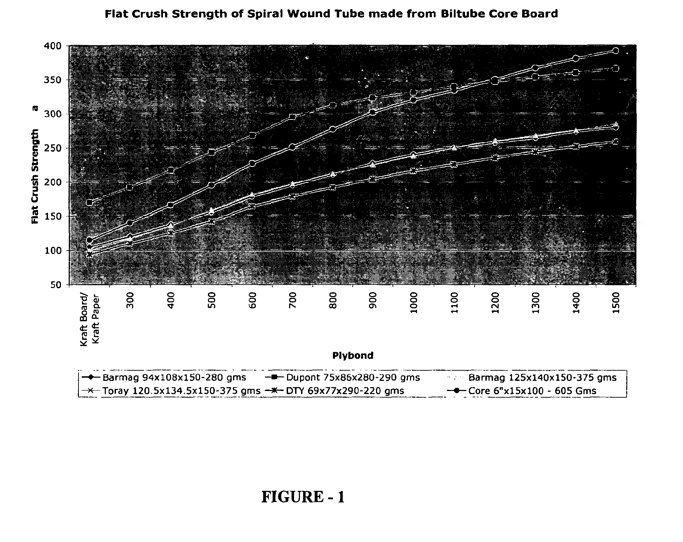

Figure 1 shows graph of flat crush strength of Spiral Wound Cylindrical Tubes manufactured out of Core Board / Core Paper and is self explanatory. The values are taken from table 1.

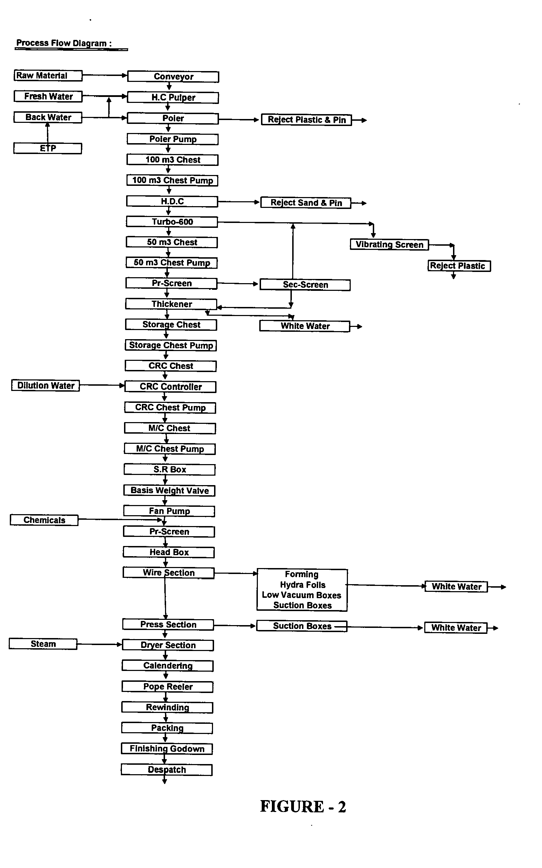

Figure 2 shows process flow diagram and is self explanatory.

### DETAILED DESCRIPTION OF THE INVENTION

### Detailed Manufacturing process

### Pulper feeding:

The starting point of process is the Pulping Section. Depending on the various parameters defined in the specifications of the Core Board, the furnish (raw material combination) is decided. The main raw material mainly based on fibrous material, which may consist of primary and secondary fibers. The primary fibers are obtained directly from plant raw materials, mainly from wood and annual non-wood plants. Secondary fibers are produced from recovered paper. Following grades are either imported or sourced locally.
1. Virgin Wood Pulp
2. Bamboo pulp
3. Hardwood
4. Softwood
5. Jungle wood
6. Cotton yarn
7. Hosiery cutting
8. wax paper
9. grease proof paper
10. rice straw
11. wheat straw
12. husk
13. sawai grass
14. Bleached pulp
15. Unbleached pulp
16. Double Sorted OCC (Old Corrugated Cartons)
17. Recovered Kraft (Old Corrugate Cartons) Paper
18. Straw Board
19. Chip Board
20. Bagasse
21. Jute pulp
22. Flax pulp
23. Hemp pulp
24. Sisal pulp
25. Rags (used textiles)
26. Laminated Paper
27. Tetra pack cartons/sheets pre-use
28. Tetra pack cartons post-use
29. New Double Lined Kraft Corrugated Cuttings (NDLK)
30. Brown (Mill Board)
31. Grey board
32. Carbon paper
33. Ribbed kraft
34. Manila paper
35. Color paper
36. Road Sweep
37. Sack kraft
38. Sand Paper
39. Tissue Paper
40. Mix Waste
41. White Ledger
42. Computer printouts
43. Office Record/Paper
44. Notebooks
45. Old News Print
46. Sorted Graphic Paper
47. White blank
48. Coated Groundwood
49. Printed Bleached Board cuttings
50. Manifold pre-consumer
51. Coated book stock
52. Mixed Paper
53. Box Board Cuttings
54. Magazines
55. Hard white envelop cuttings
56. White woodfree shavings
57. Hard white shavings
58. Unprinted Bleached Board
59. Ledger paper
60. Security paper
61. Currency paper
62. Azure wove Paper
63. Cheque paper
64. Bond paper

The combination of the furnish is decided on the basis of Burst factor, Tensile strength, Ply Bond, COBB, Bulk, GSM, etc. defined either by the customer or recommended by in-house technical team based on the application.

### Conveyor:

The furnish is loaded on to the conveyor, which carries the furnish in to the pulper. Various types of conveyors are used depending on the batch size, quality of furnish, space availability and height of the pulper from the bottom.

The basic function of conveyor is only to feed the pulper and as such irrespective of the type of conveyor, it has no bearing on the end quality of the product.

### Pulper:

Furnish is poured into the Pulper thru conveyor. The pulping process is a batch type process. You need to make sure that the combination desired is maintained for each pulper batch. Water is added together with certain amount of furnish. The water is added into sufficient quantity to maintain the consistency (amount of pulp present per liter of water & it is measured as gms/ltr) of the pulp at 2%-30%. Rotor inside the pulper ensures that the various furnish fed inside is pulped and mixed uniformly to develop the homogenous pulp of desired consistency. The rotor keeps functioning till the fibers are separate at desired Degree SR.
Degree SR (Fiber Freeness) is measurement of the rate at which a diluted suspension of pulp may be de watered. Units of measurement - Schopper Riegler value °SR , Canadian standard freeness value °CSF. The instrument consist of sealing cone & it is lifted pneumatically from the drainage chamber and the suspension is dropped through the wire screen which is in the drainage chamber. Depending on the condition of the fibre suspension the water flows more or less quickly from the drainage chamber , through a side potlet into a measuring cylinder. The water is measured in the cylinder and this is the freeness °SR.

The Degree SR (Fiber Freeness) is very important for the process and is maintained between 10 and 40 in the pulper and between 45 and 75 at the Head box for GSM range of 250 plus (Core Board). Below250 GSM, the Degree SR is maintained between 20 and 55 at the pulper and between 40 and 80 at the Head box.

The pulping process to achieve desired Degree SR may take minimum 2 minutes to up to 120 minutes depending upon the quality of the furnish.

The pulping process thru rotor also ensure that other contaminations such as plastic, metal, aluminum, sand, thermocol, etc are completely separated from the paper fiber.

### Technical specifications

• Batch Capacity: 1 m3 to 200 M³
• Operating consistency: 2%-30%
• Speed of rotor: 40 - 400 RPM
• Pulping time: 2 minutes to 150 minutes

Various types of pulpers can be used for the process of pulping which include High Consistency Pulper, Medium Consistency Pulper, Low Consistency pulper, Horizontal pulper, Vertical pulper, Batch type pulper, Continuous pulper, etc. The basic purpose of pulper is to separate the fibers and as such any such type of pulper meeting this functionality can serve for the making of Core Board or Core Paper.

### Decontaminator:

The entire batch, then, passes thru a decontaminator during which most of the plastic and metal parts are separated from the pulp and cleaner pulp moves forward into storage chests. Required amount of water is added into the decontaminator to assist the cleaning process.

### Technical specifications

• Operating capacity: 0.5 m³- 12.0 m³
• Operating consistency: 3% - 10%
• Speed of rotor: 50 RPM - 500 RPM
• Perforation size: 3 mm - 15 mm
   The function of decontaminator is to separate the non-fibrous material from the fibrous material and remove it. And as such any type of such decontaminator meeting this functionality can serve for the making of Core Board or Core Paper.

### Storage Chest:

Storage chest is mainly used to store the suspension. Accept furnish from the decontaminator passes on to the storage chest. The storage chest has an agitator, which while storage of pulp, continuously stirs it up and maintains uniform consistency at all levels. The consistency in storage chest is 3% to 10%.

Agitator consists of aerofoil type propellers, which are widely used for agitation of fibrous stock suspensions in vertical and horizontal chests. The blade profile prevents the entanglement of long impurities like strings, plastic strips etc.

### Technical specifications

• Impeller diameter: 100 - 2000 mm
• Motor specification: 20 HP - 200 HP
• RPM of Impeller: 50 - 1000 RPM

### High Density Cleaner and/or Low Density Cleaner:

From the storage chest this pulp is passed thru High Density Cleaner (HDC) and/or Low Density cleaner. The function of HDC/LDC is to remove the heavier and lighter impurities such as glass, pins, sand, thermocol particles. These impurities settle down in a separate dirt vessel provided with two numbers of pneumatically operated pulp valves. Stock is fed tangentially into the inlet portion, which along with centrifugal action of specially designed rotor is forced downward.

### Technical specifications

• Capacity: 500 - 5000 LPM
• Operating consistency: 2%-6%
• Motor specification: 2 HP - 30 HP
• Speed of rotor: 200-1200 RPM

The function of HDC or LDC is to remove the unwanted material from the pulp. And as such any such type of HDC/LDC meeting this functionality can serve for the making of Core Board or Core Paper.

### Turbo Separator:

The cleaner pulp thus moves forward to pass thru Turbo separator. Turbo separator is used as a secondary Pulper and installed after HD cleaner. Turbo separator is designed to remove light & heavy impurities & impurities which are not separated in high density cleaner is sent to turbo separator. It eliminates light and heavy contraries such as Thermo coal & plastic , Heavy impurities like sand particles , Pins , metals , rope & glass particle, corks, adhesive tapes etc from the stock. The stock is fed into the inlet chamber. The inlet chamber is having two separate outlets for light and heavy rejects. The light rejects is taken from the center of the door and whereas the heavy rejects which gets accumulated in the chamber is taken out tangentially at regular intervals and drained. The stock is screened with the help of specially designed rotor and the perforated plate. The accept is collected in the storage chest and the light rejects are taken in the Vibrating screen for fiber recovery.

### Technical Specifications

• Operating consistency: 1% - 5%
• Motor specification: 20 HP - 500 HP
• Speed of rotor: 200 - 1200 RPM
• Hole Size: 1 mm - 6 mm
   The function of Turbo Separator is to remove the unwanted material from the pulp. And as such any such type of Turbo Separator meeting this functionality can serve for the making of Core Board or Core Paper.

### Storage chest:

The cleaned pulp from the Turbo Separator passes thru another Storage Chest. The main function of chest is to store pulp, which is received from Turbo separator. Pulp Consistency in storage chest is 2-5%. The pulp, which is present in chest, kept under continuous agitation to achieve uniform consistency.
Operating consistency is up to 5%

### Chest agitator:

Chest agitator which consist of aerofoil type propellers which are used for agitation of fibrous stock suspensions. Agitator consists of aerofoil type propellers, which are widely used for agitation of fibrous stock suspensions in vertical and horizontal chests. The blade profile prevents the entanglement of long impurities like strings, plastic strips etc.

### Technical specifications

• Impeller diameter: 100 - 3000 mm
• Motor specifications: 20 HP - 500 HP
• RPM of Impeller: 50 - 1000 RPM

### Primary Pressure screen:

Primary pressure screen is vertical centrifugal outward flow type pressure screen is used for eliminating contraries in thick stock preparation system. Operating consistency between 2-3% with conical hole drilled basket. Pressure screen is used for eliminating sand particles in thick stock preparation system. Operating consistency up to 5%. The unscreened stock is fed into the inlet chamber, which avoids heavyweight particles entering between rotor and screen basket, thereby avoiding damage to the equipment. Specially designed rotor is dynamically balanced and suitable for large flat shaped contaminants. Rotor edge is hard faced. The accept of this screen is feed to Thickener and heavy and light reject of the screen is collected in standpipe. Water is feed with high pressure pump for reject cleaning and dilution.

### Technical specifications

• Operating consistency: up to 5.0%
• Motor specification: 20 HP - 200 HP
• Speed of rotor: 200- 2000 RPM
• Basket type: Slotted or perforated
• Slot/Perforation Size: 0.1 mm- 1.0 mm

The function of Pressure Screen is to remove the unwanted material from the pulp. And as such any such type of Pressure Screen meeting this functionality can serve for the making of Core Board or Core Paper.

### Reject tank:

It is used to collect the heavy and light reject of Primary Pressure Screen. It also consists of partition to separate sand from the heavy and light reject material. Drain line is provided to drain the sand and unusable material. Dilution line is provided to maintain low consistency, which helps further cleaning.
Operating consistency is maintained up to 4%

### Secondary Screen:

The reject screen works in cycles with fully automatic operation. The stock to be processed is entered into the inlet chamber for a predetermined time (depending upon the contamination in the furnish). The specially designed drum rotor with foils rotates and cleans the fibers through a slotted basket with calibrated slots. Contaminants are stopped by this slotted basket, which is then washed during washing process to separate and further recover the good fibers. Reject is finally drained and the whole cycle repeats. The cycle time duration is adjusted depending upon the contaminants in the stock. The accepts of the screen is feed to thickener for thickening and light reject is feed to ETP and heavy reject is feed storage tank for further recovery.
Operating consistency is maintained up to 3%.

### Technical specifications

• Operating consistency: 0.2 -3.0%
• Motor specification: 10 HP - 200 HP
• Speed of rotor: 100 - 1000 RPM
• Slot/Perforation Size: 0.1 mm - 1.0 mm

The function of Secondary Screen is to remove the unwanted material from the pulp. And as such any such type of Secondary Screen meeting this functionality can serve for the making of Core Board or Core Paper.

### Vibrating Screen:

It is used for stock screening and the treatment of rejects coming from turbo cleaners and storage tank. The specially designed vibratory motor fixed on the cradle suspended on four heavy duty helical springs provides controlled vibration to the perforated screen plate to screen the stock and reduces fiber loss.

### Technical specifications

• Operating consistency: up to 4.0%
• Motor specification: 1HP- 100 HP
• Slot/Perforation Size: 0.1 mm - 1.0 mm

The function of Vibrating Screen is to recover the fiber. And as such any such type of Vibrating Screen meeting this functionality can serve for the making of Core Board or Core Paper.

### Thickener:

Decker thickner comprising of CI/SS moulds and MS/SS vat, are best suited for removal of excess water from stock. The stock enters under the vat is filtered and dehydrated naturally by drum wrapped with different wire mesh size. The drum is driven with variable speed drive for setting the drainage of different freeness of stock. In the process of cleaning of pulp, water is added at various point and pulp consistency goes down. To bring consistency to requisite levels, the thickener is used. Thickener removes water from the pulp stock and increases the pulp consistency. Input consistency up to 3.0% and output consistency of up to 7.0%. The Thickener is driven with motor. Accept material from Thickener is feed to storage chest for storage.

The function of Thickener is to dehydrate the pulp stock and increase the consistency. And as such any such type of Thickener meeting this functionality can serve for the making of Core Board or Core Paper.

### Technical specifications

• Motor specification: 1 HP - 100 HP
• Thickener rotation: 2 - 50 RPM
• Wire mesh: 40x45

### Storage chest:

The thickened pulp from the thickener is passed into the storage chest. The main function of chest is to store pulp, which is received from Thickener. Pulp Consistency in storage chest is up to 7%. The pulp, which is present in chest, kept under continuous agitation to achieve uniform consistency.

### Chest agitator:

Agitator consists of aerofoil type propellers, which are widely used for agitation of fibrous stock suspensions in vertical and horizontal chests. The blade profile prevents the entanglement of long impurities like strings, plastic strips etc. Operating consistency is up to 7%.

### Refiner:

The function of refiner is to increase the degree SR of the pulp. By increasing the degree SR, we can increase the Bursting strength of paper. Length of fiber will reduce by means of abrasion action between discs. Tri disc refiner consists of three discs in which two are fixed and one is moving. The moving disc adjusted depending upon fiber length & °SR of fiber. Length of fiber will reduce by means of abrasion action between discs.

### Technical specifications

• Operating consistency: up to 6%
• Motor specification: 20 HP to 500 HP
• Disc diameter: 2" - 34"
• Inlet pressure: 1.0 to 5.0 Kg/cm²

The function of Refiner is to increase the degree SR. And as such any such type of Refiner meeting this functionality can serve for the making of Core Board or Core Paper.

### Storage chest:

The main function of chest is to store pulp, which is received from 60 m3 chest. Pulp Consistency in storage chest is up to 7%. The pulp, which is present in chest, kept under continuous agitation to achieve uniform consistency.

### Chest agitator:

Agitator consists of aerofoil type propellers, which are widely used for agitation of fibrous stock suspensions in vertical and horizontal chests. The blade profile prevents the entanglement of long impurities like strings, plastic strips etc.
Operating consistency is maintained up to 7%.

### Consistency Regulator and Controller (CRC):

The main function of the CRC is to control the consistency and maintain the uniform consistency against set point. The set point consistency material from CRC is feed to machine chest. It will not increase any consistency if the in feed consistency of material is low the set point. If the in feed consistency is higher than set point then dilution water is added through control valve. The control valve get signal from equipment.

### Chest Specifications

- Inlet Consistency:: 1.0% - 5.0%
- Outlet Consistency:: 0.8% - 4.5%

### Machine chest:

Stock received from CRC is stored in machine chest with set point consistency. Suspension is kept under continuous agitation. Machine chest level always kept under constant head. Machine chest & storage chest are same , the pulp from m/c chest is directly feed to m/c hence it is called machine chest.

### Chest agitator:

Agitator consists of aerofoil type propellers, which are widely used for agitation of fibrous stock suspensions in vertical and horizontal chests. The blade profile prevents the entanglement of long impurities like strings, plastic strips etc.
Operating consistency is maintained up to 7%.

### Constant level box:

The main function of constant level box is to maintain constant flow of stock to fan pump. It consist of three compartments, first one is Inlet flow from machine chest pump, second is outlet line to Fan pump and third is overflow line to machine chest.

### Chemical section:

The following chemical are used during manufacturing paper
• Aluminum Sulphate Ferric Liquid or any acidic organic compound (Rosin, Calcium carbonate, Caustic) to reduce the pH value of the pulp
   1) Rosin or any sizing agent
   2) Krofta or any retention aid
   3) Starch or any strengthening agent like Alkaline solution of Sodium Silicate Ratio 1:2.05 (Na2o : Sio2)
   4) Silicates including Magnesium silicate, Sodium silicate, calcium silicate, Potassium Silicate, Nano Silicate or any kind of silicate.
   5) Urea or Melamine Formaldehyde or Resorcinol Formaldehyde, or any other strengthening agent
   6) Formaldehyde or Sodium Benzoate or any kind of preservative
   7) HCL or any kind of acid
   8) Defoaming agents or deaerators like Aqueous Emulsions, Synthetic Oils, Mineral Oils, Formaldehyde etc.
   9) Dyes and Pigments

### Aluminum Sulphate Ferric Liquid:

Aluminum sulphate ferric liquid is basically used as a sizing agent, which is important for web formation at the wire table. It also reduces the pH value of the pulp. The pH of the pulp may be 6.5 to 10.0. With the help of Alum, the pH value is brought down between 5.0 and 7.0.

### Specifications

• pH: 2.0 to 4.0 (10% Solution)
• Alumina content: >6%
• Specific gravity: 1.25 to 1.40
   Alum is dosed at the wet end i.e. in pulper or any of the chest or the suction lines feeding the Head Box.

### Rosin:

Rosin is used as a binder. Rosin is alkaline and it further helps the sizing of pulp and formation of web on the wire table.

### Specifications

• pH: 7.5.0 to 13.0
• Solid content: >30%
• Specific gravity: 1.06 to 1.25

Rosin is dosed at the wet end i.e. in pulper or any of the chest or the suction lines feeding the Head Box.

### Krofta Chemical:

• Krofta is used as retention agent.
**•** It improves retention of chemical and fibers on the wire.

Krofta Chemical is dosed at the wet end i.e. in pulper or any of the chest or the suction lines feeding the Head Box.

### Specifications

• PH:- 4.0 to 7.0
• Viscosity:- > 1200 cps by Brook field Viscometer

### Starch:

Starches are applied in the papermaking process at several stages by several different methods to achieve desired results.

Following types of starches and adhesives are used to achieve internal fiber bonding.
1. Potato
2. Corn
3. Guar gum
4. Tapioca
5. Wheat
6. Rice
7. Cassava
8. Sago
9. Tamarind seed
10. British gums
11. Casein
12. Acrylic based
13. Synthetic Adhesive
14. Polyvinyl Acetate
15. Dextrin
16. cationic polymers
17. Polyvinylamine
18. Vegetable gums
19. Locust bean gum
20. Polyacrylamide Resins
21. Polyvinylformamide (PVF) / Polyvinylamine Resins (PVAm)
22. Melamine-Formaldehyde Resins
23. Urea-Formaldehyde Resins
24. Epoxidised Polyamide Resins
25. Glyoxalated Polyacrylamide Resins
26. Polyethylenimine (PEI)
27. Polyvinylamines
28. Polysocyanate
29. Dialdehyde starch

The starches used are in native, cationic or modified form.

**'Starch gel'** is prepared and mixed with the pulp. It helps improving ply bond, burst factor, sizing, retention and formation. Starch infusion ratio depends upon which ply bond grade paper is being produced.

Starch gel is added into the process in concentrations of 5% to 35% of the total end product weight depending on the required ply bond (internal fiber bonding) range between 300 jules/m² and 1500 jules/m² and other dry strength improvement requirements.

The starch gel is prepared by cooking the starch along with Gelling Solution before infusion.

### Method of Preparation of Liquid Starch gel

• Take the required amount of normal water (untreated or treated but preferably of lower hardness) in a steam jacketed SS vessel.
• Place an agitator or homogenizer. The speed of Agitator / homogenizer to be adjusted according to the amount of starch to be added resulting in a varying viscosity
• Depending on the specific plybond strength required in the board, add specified amount of starch (720-1440 kg) Slowly in the vessel with the agitator / homogenizer in ON position
• Add 5%-30% of gelling solution as a percentage of starch (with continuous stirring).
• The gelling solution is a mix of 200-800 kgs of Silicates, 5-30 kgs of strengthening agent like Urea, 5-35 kgs of Formalin, 0.5-12 kgs of HCL homogenized with the help of stirrer at 30-65° Celsius.
• Heat the mixture with the help of steam. Control temperature between 40 - 50° for the 1^{st} 30 minutes followed by increasing the temperature between 55 - 65° for the rest of the time period till the mixture gets partially gelatinized.

### Specifications of starch

• PH:4.0 to 9.0 (10% Solution)
• Viscosity: 32 to 60 Sec/50 ml
• Moisture: Max 16%
• Ash: Max 2.0%
• Acidity: 0.80 to 1.0 ml of 0.1 NaoH solution
   The starch gel is dosed into the pulper or in blending chest or thru suction line of Fan Pump or at the head box or sprayed on the paper web passing thru the wire table. In case of mould machine or former machine, it can be dosed at the wet end. In case of single layer or multi layer wire machine, it can be dosed either of the above mentioned points.
   On the wire part the excess water is removed from the pulp thru Forming Board, Table rolls, Hydro foils (the elements which are mounted on wire to drain water present pulp & drainage is takes place by means of suction created by vacuum pump), Low vacuum boxes, Suction boxes and Suction couch. The starch gel, spread uniformly within the pulp, acts as a retention agent and ensures minimum drainage of fiber along the dewatering process.
   Towards the end of the wire, steam shower is installed with following specifications.

### Steam Shower Specifications

• Steam pressure: 4kg - 7kg
• Distance of shower from the wire: 50 mm - 200 mm depending on the GSM and thickness of Core Board and Core Paper
• Number of shower: up to 20
• Number of steam holes : 60 - 150

Due to the steam shower towards the end of the wire, the temperature of Pulp on the wire goes up from 40°C - 48°C to 43°C - 60°C. The partially gelatinized starch within the pulp gets fully gelatinized. The molecular weight of the starch increases and the chain becomes longer. The expanded chain binds the fibers within the pulp and creates a stronger web. This strongly linked web enables extensive hydrogen bonding with fiber surfaces and gives extra bonding strength to the finished Core Board.

The mechanism of dry strength improvement by wet-end starch is based on inter-fiber bonding. Here its free glucose hydroxyl groups participate in hydrogen bonding with fiber surface cellulose molecules, which means a chemical hydration of the fiber compound system. Starches provide more uniformly distributed fiber-fiber bonds by hydrogen bonding.

### Paper Machine Section

### Pressure screen:

Medium consistency vertical centrifugal outward flow type pressure screen is used to disintegrate the lumps present in the pulp. Operating consistency between 0.5 -3.0% with counter sung hole drilled basket.
Operating consistency is maintained up to 0.5%-3.0%.

The basic purpose of pressure screen is to ensure homogenous mixing of chemicals into pulp and prevent impurities from going on to the main machine. And as such any such type of Pressure Screen meeting this functionality can serve for the making of Core Board or Core Paper.

### Head box:

To receive the stock supplied by fan pump and evenly distribute across the whole width of the paper m/c. To maintain uniformity of fibrous suspension with the help of holey rolls (Hallow cylinder with perforated hole is called holey roll & its main function is to distribute fibrous suspension evenly with the help of holes present in roll & it is driven by means of Variable frequency motor). Supply of stock on the paper m/c in the form of wider stream of uniform thickness without local flow disturbances to give uniform basis weight. Head box can consist of multiple spindles at regular pitch and there is a possibility of adjustment of each spindle for better Cross Direction profile.

The basic purpose of Head box is to release the pulp at desired consistency and with minimum turbulence for equal pulp spread across the wire part in cross direction and machine direction and as such any such type of Head box meeting this functionality can serve for the making of Core Board or Core Paper.

### Wire part:

Its function is to wave and dewater the stock in such a way that paper web formed is sufficient strong to run through the process.

A typical wire part consist of six parts from which dewatering takes place.

| | **Parts** | **Nos.** | **Consistency Inlet (%)** |
|---|---|---|---|
| 1. | Forming Board | 01 - 05 | 0.50 - 1.80 |
| 2. | Table rolls | 02 - 08 | 2.00 - 3.00 |
| 3. | Hydro foils | 03 - 09 | 3.00 - 4.00 |
| 4. | Low vacuum boxes | 02 - 10 | 4.00 - 5.00 |
| 5. | Suction boxes | 03 - 16 | 7.0 - 18.0 |
| 6. | Suction couch | 01 | 15.0 - 25.0 |

The basic purpose of Wire Table is to ensure the gradual removal of water from the pulp and web formation. And as such any such type of Wire meeting this functionality can serve for the making of Core Board or Core Paper.

Though the comments explain the process on the wire part, in specific, the end results can also be achieved on any kind of Paper Machines of past or present technologies including single layer and multi-layer wires, former machines, single mould or multi-mould machines, etc.

### Vacuum System:

Paper web after table rolls or stationary drainage elements passes to Hydro foils, low vacuum boxes suction boxes, Suction couch and in press section.

Dewatering at each stage takes place under the effect of vacuum created by vacuum pumps continuously. Pumps continuously remove water and air from the box, which is sucked from the web.

The basic purpose of Vacuum system is to help release water from the wire table in gradual manner. And as such any such type of Vacuum System meeting this functionality can serve for the making of Core Board or Core Paper.

### Press part:

The paper web formed on the wire part passes onto press section, Pressing of web on paper m/c follows entering of wet web through the nip of two rolls running under pressure. Under the effect of pressure b/w the two rolls further water removal of paper is obtained and its compactness and strength is increased. Our press part consists of two presses called first press and Second press. The nip load of first press is less compared to second press and also depending upon GSM and thickness of paper.

The basic purpose of Press part is removal of water and formation of bulk. And as such any such type of Presses meeting this functionality can serve for the making of Core Board or Core Paper.

### Drying process:

The paper web formed on the press section passes onto dryer section and the moisture inside the paper is gradually removed thru the steam within dryer. The steam dryers are divided into different groups and they are operated different pressures and temperatures depending on the GSM of the Core Board Core Paper, furnish and chemical composition, environmental conditions, the speed of the machine and the moisture percentage required within Core Board/Paper at the point of winding.

The basic purpose of drying process is removal of water from the paper and bring it to desired moisture content before winding. And as such any such type of dryers meeting this functionality can serve for the making of Core Board or Core Paper.

### Calendar section:

Calendar is mainly used to achieve the surface finish of paper and required surface finish is obtained by passing paper in single nip or multiple nip. Fine adjustment of calendar pressure is done to have uniformity in thickness of paper.
The basic purpose of Calendar Section is surface smoothening. And as such any such type of Calendar meeting this functionality can serve for the making of Core Board or Core Paper.

### POPE reeler:

The function of the POPE reeler is to wind the paper in the semi-finished form at required diameter and deckle size before passing on to the Rewinder and/or slitter for finished product as per customer specifications.

The basic purpose of POPE reeler is winding of continuous sheets of paper coming out of dryer and calendar section. And as such any such type of Head box meeting this functionality can serve for the making of Core Board or Core Paper in accordance with this invention.

### Flat crush strength of Spiral Wound Cylindrical Tubes manufactured out of Core Board / Core Paper

**Table 1**

| | | | **Plybond** | | | | | | | | | | | | |
|---|---|---|---|---|---|---|---|---|---|---|---|---|---|---|---|
| **Winder Technology/Type** | **Tube Dimensions: ID x OD x Length-Weight** | **Kraft Board/Kraft Paper** | **300** | **400** | **500** | **600** | **700** | **800** | **900** | **1000** | **1100** | **1200** | **1300** | **1400** | **1500** |
| | 94x108x 150-280 | | 12 | 13 | 15 | 17 | 19 | 21 | 22 | | | | | | |
| Barmag | gms. | 105 | 0 | 7 | 6 | 9 | 5 | 1 | 7 | 240 | 250 | 258 | 265 | 274 | 280 |
| | 75x86x2 80-290 | | 19 | 21 | 24 | 26 | 29 | 31 | 32 | | | | | | |
| Dupont | gms. | 170 | 2 | 7 | 3 | 8 | 5 | 2 | 3 | 331 | 340 | 347 | 354 | 360 | 366 |
| | 125x140 x150-375 | | 11 | 13 | 15 | 18 | 19 | 21 | 22 | | | | | | |
| Barmag | gms. | 99 | 7 | 6 | 8 | 2 | 7 | 2 | 5 | 238 | 250 | 260 | 268 | 276 | 285 |
| | 120.5x13 4.5x150- | | 11 | 12 | 14 | 16 | 18 | 20 | 21 | | | | | | |
| Toray | 375 gms. | 95 | 0 | 7 | 6 | 7 | 5 | 2 | 6 | 230 | 241 | 250 | 257 | 264 | 271 |
| | 69x77x2 90-220 | | 11 | 12 | 14 | 16 | 17 | 19 | 20 | | | | | | |
| DTY | gms. | 94 | 0 | 5 | 2 | 4 | 9 | 2 | 4 | 216 | 226 | 235 | 244 | 252 | 259 |
| | 6"x15x10 0 - 605 | | 14 | 16 | 19 | 22 | 25 | 27 | 30 | | | | | | |
| Core | gms. | 115 | 0 | 6 | 5 | 7 | 1 | 7 | 2 | 320 | 334 | 350 | 367 | 381 | 392 |

| | | | | | | | | | | | | | | | |
|---|---|---|---|---|---|---|---|---|---|---|---|---|---|---|---|
| **Notes:** 1. All readings are flat crush strength at moisture content of 7% to 8%. 2. Tests conducted after 48 hours conditioning of paper tubes at 23° Celsius +/- 1% and 65 RH +/- 2. 95% of the values satisfying the stated figures. 3. Synthetic Adhesive of high grade must be used for all the layers of the tubes. | | | | | | | | | | | | | | | |

This invention provides a process for manufacturing of a novel monolithic Core Paper (below 250 GSM) and Core Board (above 250 GSM and up to 1500 GSM), which can be used for all applications where currently the Kraft paper and Kraft board are used with unique advantages of the product having significantly greater strengths due to unique manufacturing process leading to a monolithic Core Paper and Core Board having very high specific plybond strengths from 280 j/m2 to 1500 j/m2. The Core Boards so manufactured, have more preferably, significant value when used in the manufacture of high grade Yarn bobbins, Yarn Tubes, Paper Cones, Paper Cores and Film Cores, where the compression strengths and stability are very critical and are required to be very high. The tubes or cores act as a carrier to various products like synthetic yarns, cotton yarn, paper, film, etc. The tubes or yarn bobbins made out of this unique monolithic Core Board can perform on very high speed winders of as high as 6000 MPM, can sustain very high centrifugal pressure created during synthetic yarn winding, maintain dimensional stability of tubes, protect from transit damages and offer higher recyclability.

The Paper Cores made out of this Core Board provide exceptional beam strength, lowest shrinkage and minimal bending and ovality across the length.

The Core Board manufactured in accordance with this invention offers three unique advantages.
1. Higher grammage monolithic board of up to 1500 grams per square meter in single layer
2. Higher Ply Bond from 280 up to 1500 jules/m²
3. Higher horizontal and vertical compression strengths (over 200% higher on comparable basis for products made from Kraft Board with equivalent GSM) for spiral and parallel winding applications

While considerable emphasis has been placed herein on the steps and reactant compounds of the preferred embodiments , it will be appreciated that many permutations and combinations of the process steps and the composition can be made and that many changes can be made in the preferred scheme without departing from the principles of the invention. These and other changes in the preferred process steps as well as other steps of the process of the invention will be apparent to those skilled in the art from the disclosure herein, whereby it is to be distinctly understood that the foregoing descriptive matter is to be interpreted merely as illustrative of the invention and not as a limitation.

Thus it is apparent that there has been provided, in accordance with the invention, a product and process that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

### EXAMPLES

### EXAMPLE 1

### Pulper feeding:

Following waste paper combination was fed in to the pulper.

| | | |
|---|---|---|
| a. | Double Sorted OCC (Old Corrugated Cartons) | 30% |
| b. | Recovered Kraft (Old Corrugate Cartons) Paper | 30% |
| c. | Bagasse Pulp | 10% |
| d. | New Double Lined Kraft Corrugated Cuttings (NDLK) | 20% |
| e. | Magazines | 10% |

### Conveyor:

The furnish was loaded on to the conveyor, which carried the furnish in to the pulper.

### Pulper:

Furnish was poured into the Pulper thru conveyor. The pulping process was a batch type process. Water was added together with certain amount of furnish. The water was added into sufficient quantity to maintain the consistency of the pulp at 7%. Rotor inside the pulper ensured that the various furnish fed inside is pulped and mixed uniformly to develop the homogenous pulp of desired consistency. The rotor was kept functioning till the fibers are separate at desired Degree SR.

The Degree SR (Fiber Freeness) was maintained at 20 in the pulper for GSM range of 350 (Core Board).

The pulping process to achieve desired Degree SR took 75 minutes.

The pulping process thru rotor also ensured that other contaminations such as plastic, metal, aluminum, sand, thermocol, etc were completely separated from the paper fiber.

### Technical specifications

• Batch Capacity: 18 M³
• Operating consistency: 7%
• Speed of rotor: 360 RPM
• Pulping time: 75 minutes

### Decontaminator:

The entire batch, then, passed thru a decontaminator during which most of the plastic and metal parts are separated from the pulp and cleaner pulp moves forward into storage chests. Required amount of water is added into the decontaminator to assist the cleaning process.

### Technical specifications

• Operating capacity: 10.0 m³
• Operating consistency: 4%
• Speed of rotor: 420 RPM
• Perforation size: 12 mm

### Storage Chest:

Accept furnish from the decontaminator passed on to the storage chest. The storage chest has an agitator, which while storage of pulp, continuously stirs it up and maintains uniform consistency at all levels. The consistency in storage chest was 3%.
Agitator consisted of aerofoil type propellers, which are widely used for agitation of fibrous stock suspensions in vertical and horizontal chests. The blade profile prevents the entanglement of long impurities like strings, plastic strips etc.

### Technical specifications

• Impeller diameter: 1500 mm
• Motor specification: 180 HP
• RPM of Impeller: 400 RPM

### High Density Cleaner and/or Low Density Cleaner:

From the storage chest this pulp was passed thru High Density Cleaner (HDC) and/or Low Density Cleaner. The function of HDC/LDC is to remove the heavier and lighter impurities such as glass, pins, sand, thermocol particles. These impurities settle down in a separate dirt vessel provided with two numbers of pneumatically operated pulp valves. Stock is fed tangentially into the inlet portion, which along with centrifugal action of specially designed rotor is forced downward.

### Technical specifications

• Capacity: 3000 LPM
• Operating consistency: 2%
• Motor specification: 2 HP
• Speed of rotor: 240 RPM

### Turbo Separator:

The cleaner pulp thus moved forward to pass thru Turbo separator. Turbo separator is used as a secondary Pulper and installed after HD cleaner. It eliminates light and heavy contraries such as corks, adhesive tapes etc from the stock.

### Technical Specifications

• Operating consistency: 1%
• Motor specification: 35 HP
• Speed of rotor: 260 RPM
• Hole Size: 5 mm

### Storage chest:

The cleaned pulp from the Turbo Separator passed thru another Storage Chest. The main function of chest is to store pulp, which is received from Turbo separator. Pulp Consistency in storage chest was 1%. The pulp, which is present in chest, kept under continuous agitation to achieve uniform consistency.

### Chest agitator:

Agitator consists of aerofoil type propellers, which are widely used for agitation of fibrous stock suspensions in vertical and horizontal chests. The blade profile prevents the entanglement of long impurities like strings, plastic strips etc.

### Technical specifications

- Impeller diameter: 1000 mm
- Motor specifications: 50 HP
- RPM of Impeller: 200 RPM

### Primary Pressure screen:

Pressure screen was used for eliminating sand particles in thick stock preparation system. The accept of this screen was feed to Thickener and heavy and light reject of the screen is collected in standpipe. Water was feed with high-pressure pump for reject cleaning and dilution.

### Technical specifications

• Operating consistency: 0.5%
• Motor specification: 40 HP
• Speed of rotor: 300 RPM
• Basket type: Slotted
• Slot/Perforation Size: 1.0 mm

### Reject tank:

It was used to collect the heavy and light reject of Primary Pressure Screen.

### Secondary Screen:

The stock to be processed was entered into the inlet chamber. The drum rotor with foils rotated and cleaned the fibers through a slotted basket with calibrated slots. Contaminants were stopped by this slotted basket. Reject was drained. The accepts of the screen was fed to thickener for thickening and light reject was feed to ETP and heavy reject was fed to storage tank for further recovery.

### Technical specifications

• Operating consistency: 0.3%
• Motor specification: 30 HP
• Speed of rotor: 540 RPM
• Slot/Perforation Size: 0.8 mm

### Vibrating Screen:

It was used for stock screening and the treatment of rejects coming from turbo cleaners and storage tank. The vibratory motor fixed on the cradle suspended on four heavy duty helical springs provided controlled vibration to the perforated screen plate to screen the stock and reduced fiber loss.

### Technical specifications

• Operating consistency: 0.80%
• Motor specification: 5 HP
• Slot/Perforation Size: 1.0 mm

### Thickener:

Thickener removed water from the pulp stock and increased the pulp consistency to 6%.

Accept material from Thickener was feed to storage chest for storage.

### Technical specifications

• Motor specification: 20 HP
• Thickener rotation: 30 RPM
• Wire mesh: 40x45

### Storage chest:

The thickened pulp from the thickener was passed into the storage chest. The pulp, which was present in chest, kept under continuous agitation to achieve uniform consistency.

### Chest agitator:

Agitator consisted of aerofoil type propellers, which are widely used for agitation of fibrous stock suspensions in vertical and horizontal chests.

### Refiner:

The refiner was used to increase the Degree SR. Pulp was passed thru refiner to get degree SR of 40.

### Technical specifications

• Operating consistency: 5%
• Motor specification: 80 HP
• Disc diameter: 18"
• Inlet pressure: 2.0 Kg/cm²

### Storage chest:

The main function of chest is to store pulp, which is received from 60 m3 chest. Pulp Consistency in storage chest was 5%. The pulp in chest was kept under continuous agitation to achieve uniform consistency

### Chest agitator:

Agitator consisted of aerofoil type propellers, which are widely used for agitation of fibrous stock suspensions in vertical and horizontal chests.

### Consistency Regulator and Controller (CRC):

The set point consistency material from CRC was feed to machine chest at 1.5%.
- Inlet Consistency:: 4.0%
- Outlet Consistency:: 1.5%

### Machine chest:

Stock received from CRC was stored in machine chest with set point consistency.

### Chest agitator:

Agitator consisted of aerofoil type propellers, which are widely used for agitation of fibrous stock suspensions in vertical and horizontal chests.

### Constant level box:

The main function of constant level box was to maintain constant flow of stock to fan pump.

### Chemical section:

The following chemical were used during manufacturing paper thru flow meters
1. Aluminum Sulphate Ferric Liquid: 30 kgs/ton
2. Rosin or any sizing agent: 1.5 kgs/ton
3. Krofta or any retention aid: 0.20 kgs/ton
4. Starch or any strengthening agent: 320 kgs/ton
5. Potassium Silicate: 5 kgs/ton
6. Resorcinol Formaldehyde: 8 kgs/ton
7. HCL: 1 kgs/ton
8. Pigment: 0.3 kgs/ton

### Aluminum Sulphate Ferric Liquid:

### Specifications

• pH: 2.0 (10% Solution)
• Alumina content: 6.5%
• Specific gravity: 1.30

### Alum was dosed at the wet end in pulper Rosin:

### Specifications

• pH: 11.0
• Solid content: 40%
• Specific gravity: 1.20
Rosin was dosed at the wet end the machine chest.

### Krofta Chemical:

Krofta Chemical was dosed at the wet end in the suction lines feeding the Head Box.

### Specifications

- PH:- 7.0
- Viscosity:- 1500 cps by Brook field Viscometer

### Modified Potato Starch:

**'Starch gel'** was prepared and mixed with the pulp.

Starch gel was added into the process in concentrations of 32% of the total end product weight. The starch gel was prepared by cooking the starch along with Gelling Solution before infusion.

### Method of Preparation of Liquid Starch gel

- Took the 5000 liters of normal water (untreated) in a steam jacketed SS vessel.
- Placed an agitator.
- Added 1440 kgs starch slowly in the vessel with the agitator in ON position.
- Added 25% of gelling solution as a percentage of starch (with continuous stirring).
- The gelling solution is a mix of Potassium Silicate, Resorcinol Formaldehyde, HCL in proportion mentioned above, homogenized with the help of stirrer at 30° Celsius.
- Heated the mixture with the help of steam. Temperature controlled between 40 - 50° for the 1^{st} 30 minutes followed by increasing the temperature between 55 - 65° for the rest of the time period till the mixture got partially gelatinized.

### Specifications of starch

- PH: 4.0 (10% Solution)
- Viscosity: 34 Sec/50 ml
- Moisture: 15%
- Ash: 1.0%
- Acidity: 0.80 ml of 0.1 NaOH solution

The starch gel was dosed into the pulper.

On the wire part the excess water was removed from the pulp thru Forming Board, Table rolls, Hydro foils, Low vacuum boxes, Suction boxes and Suction couch.

Towards the end of the wire, steam shower was installed with following specifications.

### Steam Shower Specifications

■ Steam pressure: 4kg /cm²
■ Distance of shower from the wire: 200 mm
■ Number of shower: 12
■ Number of steam holes : 120

Due the steam shower towards the end of the wire, the temperature of Pulp on the wire went up.
The partially gelatinized starch within the pulp got fully gelatinized.

### Paper Machine Section

### Pressure screen:

Medium consistency vertical centrifugal outward flow type pressure screen was used to disintegrate the lumps present in the pulp. Operating consistency was 0.7% with counter sung hole drilled basket.

### Head box:

The pulp slurry was evenly distributed on to the wire part with thru Head Box.

### Wire part:

Pulp slurry passed on to the wire part. Wire part consisted of six parts from which dewatering took place.

| **Parts** | | **Nos** | **Consistency Inlet (%)** |
|---|---|---|---|
| 1. | Forming Board | 01 | 0.70 |
| 2. | Table rolls | 06 | 2.30 |
| 3. | Hydro foils | 08 | 3.00 |
| 4. | Low vacuum boxes | 01 | 4.50 |
| 5. | Suction boxes | 02 | 12.0 |
| 6. | Suction couch | 01 | 19.0 |

### Vacuum System:

Paper web after table rolls or stationary drainage elements passed to Hydro foils, low vacuum boxes suction boxes, Suction couch and in press section.

Dewatering at each stage took place under the effect of vacuum created by vacuum pumps continuously. Pumps continuously removed water and air from the box, which is sucked from the web.

### Press part:

The paper web formed on the wire part passed onto press section, pressing of web on paper m/c followed entering of wet web through the nip of two rolls running under pressure. Under the effect of pressure b/w the two rolls further water removal of paper was obtained and its compactness and strength was increased.

### Drying process:

The paper web formed on the press section passed onto dryer section and the moisture inside the paper was gradually removed thru the steam within dryer.

### Calendar section:

Calendar was used to achieve the surface finish of paper and required surface finish is obtained by passing paper in multiple nip. Fine adjustment of calendar pressure was done to have uniformity in thickness of paper.

### POPE reeler:

The POPE reeler was used to wind the paper in the semi-finished form at required diameter and deckle size before passing on to the Rewinder and/or slitter for finished product as per customer specifications.

### The resultant Core Board:

The Core Board produced from this process showed following results when 10 samples were checked.

| | |
|---|---|
| GSM: | 350 (Minimum 341, Maximum 362) |
| Ply bond: | 1,123 (Minimum 988, Maximum 1203) |

Tubes of following specifications were made from the Core Board.
- Inner Diameter:: 125 mm
- Outer Diameter:: 140 mm
- Length:: 150 mm
- Weight:: 370 grams

10 samples were checked which gave following results.

### Flat Crush Strength:

246, 258, 239, 246, 267, 251, 254, 263, 249, 259

We manufactured tubes of same specifications from the Kraft Board and Kraft Paper available in the local market.

10 samples were checked which gave following results.

### Flat Crush Strength:

88, 86, 94, 91, 97, 78, 86, 93, 86, 98

### EXAMPLE2

Process details are same as in example 1.

### Pulper feeding:

Following waste paper combination was fed in to the pulper.

| | | |
|---|---|---|
| 1. | Recovered Kraft (Old Corrugate Cartons) Paper | 30% |
| 2. | Straw Board | 15% |
| 3. | Jute pulp | 05% |
| 4. | Tetra pack cartons/sheets pre-use | 10% |
| 5. | Tetra pack cartons post-use | 10% |
| 6. | Brown (Mill Board) | 20% |
| 7. | Mix Waste | 10% |

### Pulper:

The water was added into sufficient quantity to maintain the consistency of the pulp at 25%. The Degree SR (Fiber Freeness) was maintained at 15 in the pulper for GSM range of 900 (Core Board).

The pulping process to achieve desired Degree SR took 4 minutes.

### Technical specifications

- Batch Capacity: 35M³
- Operating consistency: 25%
- Speed of rotor: 50 RPM
- Pulping time: 4 minutes

### Decontaminator:

The entire batch, then, passed thru a decontaminator.

### Technical specifications

- Operating capacity: 8.0 m³
- Operating consistency: 10%
- Speed of rotor: 60 RPM
- Perforation size: 15 mm

### Storage Chest:

The consistency in storage chest was 10%.

### Technical specifications

- Impeller diameter: 1500 mm
- Motor specification: 200 HP
- RPM of Impeller: 50 RPM

### High Density Cleaner and/or Low Density Cleaner:

### Technical specifications

- Capacity: 3000 LPM
- Operating consistency: 6%
- Motor specification: 20 HP
- Speed of rotor: 320 RPM

### Turbo Separator:

### Technical Specifications

- Operating consistency: 5%
- Motor specification: 200 HP
- Speed of rotor: 600 RPM
- Hole Size: 7 mm

### Storage chest:

Pulp Consistency in storage chest was 5%.

### Chest agitator:

### Technical specifications

- Impeller diameter: 1600 mm
- Motor specifications: 240 HP
- RPM of Impeller: 800 RPM

### Primary Pressure screen:

### Technical specifications

- Operating consistency: 3.5%
- Motor specification: 120 HP
- Speed of rotor: 1200
- Basket type: Perforated
- Slot/Perforation Size: 0.8 mm

### Secondary Screen:

### Technical specifications

- Operating consistency: 3.0%
- Motor specification: 60 HP
- Speed of rotor: 100 RPM
- Slot/Perforation Size: 0.6 mm

### Vibrating Screen:

### Technical specifications

- Operating consistency: 2.50%
- Motor specification: 60 HP
- Slot/Perforation Size: 0.8 mm

### Thickener:

Thickener removed water from the pulp stock and increased the pulp consistency to 7%.

### Technical specifications

- Motor specification: 50 HP
- Thickener rotation: 05 RPM
- Wire mesh: 40x45

### Refiner:

### Technical specifications

- Operating consistency: 6%
- Motor specification: 300 HP
- Disc diameter: 34"
- Inlet pressure: 4.5 Kg/cm²

### Storage chest:

Pulp Consistency in storage chest was 6%.

### Consistency Regulator and Controller (CRC):

The set point consistency material from CRC was feed to machine chest at 3.5%.
- Inlet Consistency:: 6.0%
- Outlet Consistency:: 3.5%

### Chemical section:

The following chemical were used during manufacturing paper thru flow meters
1. Aluminum Sulphate Ferric Liquid: 60 kgs/ton
2. Rosin or any sizing agent: 3.0 kgs/ton
3. Krofta or any retention aid: 0.40 kgs/ton
4. Starch or any strengthening agent : 160 kgs/ton
5. Potassium Silicate: 10 kgs/ton
6. Resorcinol Formaldehyde: 16 kgs/ton
7. HCL: 2 kgs/ton
8. Pigment: 0.6 kgs/ton

### Aluminum Sulphate Ferric Liquid:

### Specifications

- pH: 3.5 (10% Solution)
- Alumina content: 9.0%
- Specific gravity: 1.25
   Alum was dosed at the wet end in pulper.

### Rosin:

### Specifications

■ pH: 8.0
■ Solid content: 50%
■ Specific gravity: 1.08

Rosin was dosed at the wet end the machine chest.

### Krofta Chemical:

### Specifications

- PH:- 4.0
- Viscosity:- 1400 cps by Brook field Viscometer

### Raw Corn Starch:

Starch gel was added into the process in concentrations of 23% of the total end product weight.

### Method of Preparation of Liquid Starch gel

- Took the 5000 liters of normal water (untreated) in a steam jacketed SS vessel.
- Placed an agitator.
- Added 720 kgs starch slowly in the vessel with the agitator in ON position.
- Added 5% of gelling solution as a percentage of starch (with continuous stirring).
- The gelling solution is a mix of Potassium Silicate, Resorcinol Formaldehyde, HCL as mentioned above, homogenized with the help of stirrer at 60° Celsius.
- Heated the mixture with the help of steam. Temperature controlled between 40 - 50° for the 1^{st} 30 minutes followed by increasing the temperature between 55 - 65° for the rest of the time period till the mixture got partially gelatinized.

### Specifications of starch

- PH: 6.0 (10% Solution)
- Viscosity: 56 Sec/50 ml
- Moisture: 12%
- Ash: 1.8%
- Acidity: 0.90 ml of 0.1 NaOH solution

### Steam Shower Specifications

- Steam pressure: 7kg /cm²
- Distance of shower from the wire: 50 mm
- Number of shower: 1
- Number of steam holes : 80

### Paper Machine Section

### Pressure screen:

Operating consistency 2.0% with counter sung hole drilled basket.

### Wire part:

| | **Parts** | **Nos** | **Consistency Inlet (%)** |
|---|---|---|---|
| 1. | Forming Board | 03 | 2.10 |
| 2. | Table rolls | 04 | 3.00 |
| 3. | Hydro foils | 03 | 3.80 |
| 4. | Low vacuum boxes | 07 | 5.00 |
| 5. | Suction boxes | 12 | 16.0 |
| 6. | Suction couch | 01 | 22.0 |

### The resultant Core Board:

The Core Board produced from this process showed following results when 10 samples were checked.
- GSM:: 900 (Minimum 863 , Maximum 942)
- Ply bond:: 580 (Minimum 548, Maximum 626)

Tubes of following specifications were made from the Core Board.
- Inner Diameter:: 120.5 mm
- Outer Diameter:: 134.5 mm
- Length:: 150 mm
- Weight:: 375 grams

10 samples were checked which gave following results.

### Flat Crush Strength:

172, 164, 177, 169, 182, 167, 165, 170, 172, 175

We manufactured tubes of same specifications from the Kraft Board and Kraft Paper available in the local market.

10 samples were checked which gave following results.

### Flat Crush Strength:

94, 93, 89, 96, 84, 87, 93, 90, 89, 94

### EXAMPLE 3

Process details are same as in example 1.

### Pulper feeding:

Following waste paper combination was fed in to the pulper.

| | | |
|---|---|---|
| 1. | Virgin Wood Pulp | 20% |
| 2. | grease proof paper | 10% |
| 3. | Unbleached pulp | 20% |
| 4. | Rags (used textiles) | 20% |
| 5. | Old News Print | 20% |
| 6. | Magazines | 10% |

### Pulper:

The water was added into sufficient quantity to maintain the consistency of the pulp at 25%. The Degree SR (Fiber Freeness) was maintained at 35 in the pulper for GSM range of 300 (Core Board).

The pulping process to achieve desired Degree SR took 65 minutes.

### Technical specifications

- Batch Capacity: 25M³
- Operating consistency: 25%
- Speed of rotor: 120 RPM
- Pulping time: 65 minutes

### Decontaminator:

### Technical specifications

- Operating capacity: 12.0 m³
- Operating consistency: 5%
- Speed of rotor: 60 RPM
- Perforation size: 15 mm

### Storage Chest:

The consistency in storage chest was 10%.

### Technical specifications

- Impeller diameter: 800 mm
- Motor specification: 80 HP
- RPM of Impeller: 200 RPM

### High Density Cleaner and/or Low Density Cleaner:

### Technical specifications

- Capacity: 2000 LPM
- Operating consistency: 4%
- Motor specification: 15 HP
- Speed of rotor: 160 RPM

### Turbo Separator:

### Technical Specifications

- Operating consistency: 3%
- Motor specification: 100 HP
- Speed of rotor: 300 RPM
- Hole Size: 3 mm

### Storage chest:

Pulp Consistency in storage chest was 3%.

### Chest agitator:

### Technical specifications

- Impeller diameter: 200 mm
- Motor specifications: 30 HP
- RPM of Impeller: 750 RPM

### Primary Pressure screen:

### Technical specifications

- Operating consistency: 2.5%
- Motor specification: 120 HP
- Speed of rotor: 500 RPM
- Basket type: Perforated
- Slot/Perforation Size: 0.8 mm

### Secondary Screen:

### Technical specifications

- Operating consistency: 1.0%
- Motor specification: 20 HP
- Speed of rotor: 100 RPM
- Slot/Perforation Size: 0.4 mm

### Vibrating Screen:

### Technical specifications

- Operating consistency: 2.50%
- Motor specification: 30 HP
- Slot/Perforation Size: 0.6 mm

### Thickener:

Thickener removed water from the pulp stock and increased the pulp consistency to 4.5%.

### Technical specifications

- Motor specification: 30 HP
- Thickener rotation: 12 RPM
- Wire mesh: 40x45

### Refiner:

### Technical specifications

- Operating consistency: 3.0%
- Motor specification: 100 HP
- Disc diameter: 14"
- Inlet pressure: 2.5 Kg/cm²

### Storage chest:

Pulp Consistency in storage chest was 3.0%.

### Consistency Regulator and Controller (CRC):

The set point consistency material from CRC was feed to machine chest at 2.0%.
- Inlet Consistency:: 4.5%
- Outlet Consistency:: 2.0%

### Chemical section:

The following chemical were used during manufacturing paper thru flow meters
1. Aluminum Sulphate Ferric Liquid: 110 kgs/ton
2. Rosin or any sizing agent: 0.1 kgs/ton
3. Krofta or any retention aid: 0.60 kgs/ton
4. Starch or any strengthening agent : 40 kgs/ton
5. Potassium Silicate: 20 kgs/ton
6. Resorcinol Formaldehyde: 12 kgs/ton
7. HCL: 4 kgs/ton
8. Pigment: 1.5 kgs/ton

### Aluminum Sulphate Ferric Liquid:

### Specifications

- pH: 4.0 (10% Solution)
- Alumina content: 6.0%
- Specific gravity: 1.35

Alum was dosed at the machine chest.

### Rosin:

### Specifications

- pH: 12.0
- Solid content: 30%
- Specific gravity: 1.15

Rosin was dosed in blending chest.

### Krofta Chemical:

Krofta Chemical was dosed on the wire part.

### Specifications

- PH:- 5.0
- Viscosity:- 1200 cps by Brook field Viscometer

### Cationic Tapioca Starch:

Starch gel was added into the process in concentrations of 4% of the total end product weight.

### Method of Preparation of Liquid Starch gel

- Took the 5000 liters of normal water (untreated) in a steam jacketed SS vessel.
- Placed an agitator.
- Added 1000 kgs starch slowly in the vessel with the agitator in ON position.
- Added 15% of gelling solution as a percentage of starch (with continuous stirring).
- The gelling solution is a mix of Potassium Silicate, Resorcinol Formaldehyde, HCL in combination mentioned above, homogenized with the help of stirrer at 40° Celsius.
- Heated the mixture with the help of steam. Temperature controlled between 40 - 50° for the 1^{st} 30 minutes followed by increasing the temperature between 55 - 65° for the rest of the time period till the mixture got partially gelatinized.

### Specifications of starch

- PH: 8.0 (10% Solution)
- Viscosity: 41 Sec/50 ml
- Moisture: 11%
- Ash: 1.8%
- Acidity: 0.90 ml of 0.1 NaOH solution

The starch gel was dosed thru Head Box.

### Steam Shower Specifications

- Steam pressure: 5 kg /cm²
- Distance of shower from the wire: 150 mm
- Number of shower: 7
- Number of steam holes : 60

### Paper Machine Section

### Pressure screen:

Operating consistency 0.8% with counter sung hole drilled basket.

### Wire part:

| | **Parts** | **Nos** | **Consistency Inlet (%)** |
|---|---|---|---|
| 1. | Forming Board | 02 | 1.0 |
| 2. | Table rolls | 03 | 2.00 |
| 3. | Hydro foils | 05 | 2.80 |
| 4. | Low vacuum boxes | 06 | 4.00 |
| 5. | Suction boxes | 1 | 15.0 |
| 6. | Suction couch | 01 | 20.0 |

### The resultant Core Board:

The Core Board produced from this process showed following results when 10 samples were checked.
- GSM:: 300 (Minimum 291 , Maximum 306)
- Ply bond:: 408 (Minimum 394, Maximum 434)

Tubes of following specifications were made from the Core Board.
- Inner Diameter:: 75 mm
- Outer Diameter:: 86 mm
- Length:: 280 mm
- Weight:: 290 grams

10 samples were checked which gave following results.

### Flat Crush Strength:

215, 222, 214, 226, 221, 211, 212, 216, 221, 218

We manufactured tubes of same specifications from the Kraft Board and Kraft Paper available in the local market.

10 samples were checked which gave following results.

### Flat Crush Strength:

174, 163, 167, 172, 158, 158, 164, 173, 169, 170

### EXAMPLE 4

Process details are same as in example 1.

### Pulper feeding:

Following waste paper combination was fed in to the pulper.
65. New Double Lined Kraft Corrugated Cuttings (NDLK) 100%

### Pulper:

The water was added into sufficient quantity to maintain the consistency of the pulp at 9%.

The Degree SR (Fiber Freeness) was maintained at 35 in the pulper for GSM range of 350 (Core Board).

The pulping process to achieve desired Degree SR took 50 minutes.

### Technical specifications

- Batch Capacity: 18M³
- Operating consistency: 9%
- Speed of rotor: 80 RPM
- Pulping time: 50 minutes

### Decontaminator:

### Technical specifications

- Operating capacity: 4.0 m³
- Operating consistency: 8%
- Speed of rotor: 60 RPM
- Perforation size: 8 mm

### Storage Chest:

The consistency in storage chest was 8%.

### Technical specifications

- Impeller diameter: 600 mm
- Motor specification: 140 HP
- RPM of Impeller: 320 RPM

### High Density Cleaner and/or Low Density Cleaner:

### Technical specifications

- Capacity: 1500 LPM
- Operating consistency: 3%
- Motor specification: 18 HP
- Speed of rotor: 1200 RPM

### Turbo Separator:

### Technical Specifications

- Operating consistency: 2.5%
- Motor specification: 30 HP
- Speed of rotor: 500 RPM
- Hole Size: 5 mm

### Storage chest:

Pulp Consistency in storage chest was 2.5%.

### Chest agitator:

### Technical specifications

- Impeller diameter: 1100 mm
- Motor specifications: 150 HP
- RPM of Impeller: 150 RPM

### Primary Pressure screen:

### Technical specifications

- Operating consistency: 2.5%
- Motor specification: 160 HP
- Speed of rotor: 340 RPM
- Basket type: Slotted
- Slot/Perforation Size: 0.5 mm

### Secondary Screen:

### Technical specifications

- Operating consistency: 1.4%
- Motor specification: 40 HP
- Speed of rotor: 440 RPM
- Slot/Perforation Size: 0.3mm

### Vibrating Screen:

### Technical specifications

- Operating consistency: 2.00%
- Motor specification: 25 HP
- Slot/Perforation Size: 0.7 mm

### Thickener:

Thickener removed water from the pulp stock and increased the pulp consistency to 5.5%.

### Technical specifications

- Motor specification: 55 HP
- Thickener rotation: 6 RPM
- Wire mesh: 40x45

### Refiner:

The refiner was used to increase the Degree SR. Pulp was passed thru refiner to get degree SR of 60.

### Technical specifications

- Operating consistency: 5.5%
- Motor specification: 240 HP
- Disc diameter: 22"
- Inlet pressure: 3.0 Kg/cm²

### Storage chest:

Pulp Consistency in storage chest was 5.5%.

### Consistency Regulator and Controller (CRC):

The set point consistency material from CRC was feed to machine chest at 3.0%.
- Inlet Consistency:: 5.5%
- Outlet Consistency:: 3.0%

### Chemical section:

The following chemical were used during manufacturing paper thru flow meters
a. Aluminum Sulphate Ferric Liquid: 60 kgs/ton
b. Rosin or any sizing agent: 1.5 kgs/ton
c. Krofta or any retention aid: 0.10 kgs/ton
d. Starch or any strengthening agent : 280 kgs/ton
e. Potassium Silicate: 02 kgs/ton
f. Resorcinol Formaldehyde: 4 kgs/ton
g. HCL: 7 kgs/ton
h. Pigment: 0.3 kgs/ton

### Aluminum Sulphate Ferric Liquid:

### Specifications

- pH: 2.0 (10% Solution)
- Alumina content: 8.0%
- Specific gravity: 1.19

Alum was dosed thru fan pump.

### Rosin:

### Specifications

- pH: 9.0
- Solid content: 60%
- Specific gravity: 1.18

Rosin was dosed into the pulper.

### Krofta Chemical:

### Specifications

- PH:- 6.0
- Viscosity:- 1450 cps by Brook field Viscometer

### Modified Corn Starch:

Starch gel was added into the process in concentrations of 28% of the total end product weight.

### Method of Preparation of Liquid Starch gel

- Took the 5000 liters of normal water (untreated) in a steam jacketed SS vessel.
- Placed an agitator.
- Added 900 kgs starch slowly in the vessel with the agitator in ON position.
- Added 6% of gelling solution as a percentage of starch (with continuous stirring).
- The gelling solution is a mix of Potassium Silicate, Resorcinol Formaldehyde, HCL as mentioned in above combination, homogenized with the help of stirrer at 60° Celsius.
- Heated the mixture with the help of steam. Temperature controlled between 40 - 50° for the 1^{st} 30 minutes followed by increasing the temperature between 55 - 65° for the rest of the time period till the mixture got partially gelatinized.

### Specifications of starch

- PH:5.5 (10% Solution)
- Viscosity: 52 Sec/50 ml
- Moisture: 15%
- Ash: 0.8%
- Acidity: 0.70 ml of 0.1 NaOH solution

The starch gel was dosed onto the wire part thru spray guns.

### Steam Shower Specifications

- Steam pressure: 6 kg
- Distance of shower from the wire: 180 mm
- Number of shower: 16
- Number of steam holes : 140

### Paper Machine Section

### Pressure screen:

Operating consistency 0.6% with counter sung hole drilled basket.

### Wire part:

| **Parts** | **Nos** | **Consistency Inlet (%)** |
|---|---|---|
| • Forming Board | 02 | 0.70 |
| • Table rolls | 08 | 2.00 |
| • Hydro foils | 02 | 3.00 |
| • Low vacuum boxes | 06 | 4.00 |
| • Suction boxes | 10 | 7.0 |
| • Suction couch | 01 | 15.0 |

### The resultant Core Board:

The Core Board produced from this process showed following results when 10 samples were checked.
- GSM:: 350 (Minimum 863 , Maximum 942)
- Ply bond:: 688 (Minimum 659, Maximum 708)

Tubes of following specifications were made from the Core Board.
- Inner Diameter:: 94 mm
- Outer Diameter:: 108 mm
- Length:: 150 mm
- Weight:: 280 grams

10 samples were checked which gave following results.

### Flat Crush Strength:

195 , 196, 192, 202, 195, 199, 201, 196, 193, 196

We manufactured tubes of same specifications from the Kraft Board and Kraft Paper available in the local market.

10 samples were checked which gave following results.

### Flat Crush Strength:

103, 106, 110, 103, 101, 109, 108, 108, 106, 104

### EXAMPLE 5

Process details are same as in example 1.

### Pulper feeding:

Following waste paper combination was fed in to the pulper.

| | | |
|---|---|---|
| 1. | Bamboo pulp | 20% |
| 2. | wheat straw | 10% |
| 3. | Bagasse | 20% |
| 4. | Tetra pack cartons post-use | 20% |
| 5. | Grey board | 20% |
| 6. | Office Record/Paper | 10% |

### Pulper:

The water was added into sufficient quantity to maintain the consistency of the pulp at 4%. The Degree SR (Fiber Freeness) was maintained at 50 in the pulper for GSM range of 230 (Core Liner).

The pulping process to achieve desired Degree SR took 6 minutes.

### Technical specifications

- Batch Capacity: 7 M³
- Operating consistency: 4%
- Speed of rotor: 360 RPM
- Pulping time: 6 minutes

### Decontaminator:

### Technical specifications

- Operating capacity: 2.0 m³
- Operating consistency: 3.0%
- Speed of rotor: 360 RPM
- Perforation size: 12 mm

### Storage Chest:

The consistency in storage chest was 8%.

### Technical specifications

- Impeller diameter: 450 mm
- Motor specification: 40 HP
- RPM of Impeller: 640 RPM

### High Density Cleaner and/or Low Density Cleaner:

### Technical specifications

- Capacity: 700 LPM
- Operating consistency: 2.0%
- Motor specification: 12 HP
- Speed of rotor: 960 RPM

### Turbo Separator:

### Technical Specifications

- Operating consistency: 1.5%
- Motor specification: 30 HP
- Speed of rotor: 500 RPM
- Hole Size: 4 mm

### Chest agitator:

### Technical specifications

- Impeller diameter: 550 mm
- Motor specifications: 30 HP
- RPM of Impeller: 650 RPM

### Primary Pressure screen:

### Technical specifications

- Operating consistency: 1.0%
- Motor specification: 60 HP
- Speed of rotor: 960 RPM
- Basket type: Slotted
- Slot/Perforation Size: 0.4 mm

### Secondary Screen:

### Technical specifications

- Operating consistency: 0.90%
- Motor specification: 20 HP
- Speed of rotor: 660 RPM
- Slot/Perforation Size: 0.5 mm

### Vibrating Screen:

### Technical specifications

- Operating consistency: 0.50%
- Motor specification: 10 HP
- Slot/Perforation Size: 1.0 mm

### Thickener:

Thickener removed water from the pulp stock and increased the pulp consistency to 3.0%.

### Technical specifications

- Motor specification: 5 HP
- Thickener rotation: 11 RPM
- Wire mesh: 40x45

### Refiner:

The refiner was used to increase the Degree SR. Pulp was passed thru refiner to get degree SR of 70.

### Technical specifications

- Operating consistency: 3.0%
- Motor specification: 80 HP
- Disc diameter: 8"
- Inlet pressure: 1.5 Kg/cm²

### Storage chest:

Pulp Consistency in storage chest was 3.0%.

### Consistency Regulator and Controller (CRC):

The set point consistency material from CRC was feed to machine chest at 2.0%.
- Inlet Consistency:: 3.0%
- Outlet Consistency:: 2.0%

### Chemical section:

The following chemical were used during manufacturing paper thru flow meters
a. Aluminum Sulphate Ferric Liquid: 10 kgs/ton
b. Rosin or any sizing agent: 2.0 kgs/ton
c. Krofta or any retention aid: 0.70 kgs/ton
d. Starch or any strengthening agent : 70 kgs/ton
e. Potassium Silicate: 20 kgs/ton
f. Resorcinol Formaldehyde: 2 kgs/ton
g. HCL: 4 kgs/ton
h. Pigment: 0.2 kgs/ton

### Aluminum Sulphate Ferric Liquid:

### Specifications

- pH: 2.5 (10% Solution)
- Alumina content: 6.0%
- Specific gravity: 1.35

Alum was dosed into CRC chest.

### Rosin:

### Specifications

- pH: 12.0
- Solid content: 55%
- Specific gravity: 1.10

Rosin was dosed thru SR box.

### Krofta Chemical:

Krofta Chemical was dosed at the pressure screen before head box.

### Specifications

- PH:- 6.5
- Viscosity:- 1350 cps by Brook field Viscometer

### Modified Tapioca Starch:

Starch gel was added into the process in concentrations of 7% of the total end product weight.

### Method of Preparation of Liquid Starch gel

- Took the 5000 liters of normal water (untreated) in a steam jacketed SS vessel.
- Placed an agitator.
- Added 720 kgs starch slowly in the vessel with the agitator in ON position.
- Added 3% of gelling solution as a percentage of starch (with continuous stirring).
- The gelling solution is a mix of Potassium Silicate, Resorcinol Formaldehyde, HCL as mentioned above, homogenized with the help of stirrer at 60° Celsius.
- Heated the mixture with the help of steam. Temperature controlled between 40 - 50° for the 1^{st} 30 minutes followed by increasing the temperature between 55 - 65° for the rest of the time period till the mixture got partially gelatinized.

### Specifications of starch

- PH: 6.5 (10% Solution)
- Viscosity: 37 Sec/50 ml
- Moisture: 9%
- Ash: 1.5%
- Acidity: 0.80 ml of 0.1 NaOH solution

The starch gel was dosed into the blending chest.

### Steam Shower Specifications

- Steam pressure: 4 kg /cm²
- Distance of shower from the wire: 80 mm
- Number of shower: 3
- Number of steam holes : 150

### Paper Machine Section

### Pressure screen:

Medium consistency vertical centrifugal outward flow type pressure screen was used to disintegrate the lumps present in the pulp. Operating consistency 1.6% with counter sung hole drilled basket.

### Wire part:

| | **Parts** | **Nos** | **Consistency Inlet (%)** |
|---|---|---|---|
| a. | Forming Board | 05 | 1.80 |
| b. | Table rolls | 06 | 3.20 |
| c. | Hydro foils | 08 | 4.00 |
| d. | Low vacuum boxes | 03 | 5.30 |
| e. | Suction boxes | 07 | 17.0 |
| f. | Suction couch | 01 | 25.0 |

### The resultant Core Board:

The Core Board produced from this process showed following results when 10 samples were checked.
- GSM:: 230 (Minimum 226 , Maximum 237)
- Ply bond:: 386 (Minimum 361, Maximum 412)

Tubes of following specifications were made from the Core Board.
- Inner Diameter:: 69 mm
- Outer Diameter:: 77 mm
- Length:: 290 mm
- Weight:: 220 grams
10 samples were checked which gave following results.

### Flat Crush Strength:

128, 131, 134, 124, 122, 129, 127, 129, 122, 129

We manufactured tubes of same specifications from the Kraft Board and Kraft Paper available in the local market.

10 samples were checked which gave following results.

Flat Crush Strength:
92, 98, 98, 97, 93, 100, 89, 95, 87, 92

### EXAMPLE 6

Process details are same as in example 1.

### Pulper feeding:

Following waste paper combination was fed in to the pulper.

| | | |
|---|---|---|
| 1. | Bamboo pulp | 10% |
| 2. | Rice straw | 10% |
| 3. | Double Sorted OCC (Old Corrugated Cartons) | 05% |
| 4. | Tetra pack cartons/sheets pre-use | 05% |
| 5. | New Double Lined Kraft Corrugated Cuttings (NDLK) | 10% |
| 6. | Brown (Mill Board) | 10% |
| 7. | Sack kraft | 05% |
| 8. | Office Record/Paper | 20% |
| 9. | Box Board Cuttings | 10% |
| 10. | Hard white envelop cuttings | 10% |
| 11. | Ledger paper | 05% |

### Pulper:

The water was added into sufficient quantity to maintain the consistency of the pulp at 14%.

The Degree SR (Fiber Freeness) was maintained at 40 in the pulper for GSM range of 325 (Cone Board).

The pulping process to achieve desired Degree SR took 9 minutes.

### Technical specifications

- Batch Capacity: 12 M³
- Operating consistency: 14%
- Speed of rotor: 450 RPM
- Pulping time: 9 minutes

### Decontaminator:

### Technical specifications

- Operating capacity: 6.0 m³
- Operating consistency: 8%
- Speed of rotor: 320 RPM
- Perforation size: 7 mm

### Storage Chest:

The consistency in storage chest was 8%.

### Technical specifications

- Impeller diameter: 600 mm
- Motor specification: 80 HP
- RPM of Impeller: 340 RPM

### High Density Cleaner and/or Low Density Cleaner:

### Technical specifications

- Capacity: 2100 LPM
- Operating consistency: 5.0%
- Motor specification: 22 HP
- Speed of rotor: 760 RPM

### Turbo Separator:

### Technical Specifications

- Operating consistency: 3.5%
- Motor specification: 30 HP
- Speed of rotor: 280 RPM
- Hole Size: 7 mm

### Chest agitator:

### Technical specifications

- Impeller diameter: 1800 mm
- Motor specifications: 50 HP
- RPM of Impeller: 650 RPM

### Primary Pressure screen:

### Technical specifications

- Operating consistency: 3.0%
- Motor specification: 40 HP
- Speed of rotor: 660 RPM
- Basket type: Perforated
- Slot/Perforation Size: 0.3 mm

### Secondary Screen:

### Technical specifications

- Operating consistency: 2.30%
- Motor specification: 40 HP
- Speed of rotor: 580 RPM
- Slot/Perforation Size: 0.4 mm

### Vibrating Screen:

### Technical specifications

- Operating consistency: 2.30%
- Motor specification: 30 HP
- Slot/Perforation Size: 0.8 mm

### Thickener:

Thickener removed water from the pulp stock and increased the pulp consistency to 7.0%.

### Technical specifications

- Motor specification: 15 HP
- Thickener rotation: 9 RPM
- Wire mesh: 40x45

### Refiner:

Pulp was passed thru refiner to get degree SR of 48.

### Technical specifications

- Operating consistency: 4.0%
- Motor specification: 120 HP
- Disc diameter: 24"
- Inlet pressure: 3.5 Kg/cm²

### Storage chest:

Pulp Consistency in storage chest was 4.0%.

### Consistency Regulator and Controller (CRC):

The set point consistency material from CRC was feed to machine chest at 3.5%.
- Inlet Consistency:: 4.0%
- Outlet Consistency:: 3.5%

### Chemical section:

The following chemical were used during manufacturing paper thru flow meters
1. Aluminum Sulphate Ferric Liquid: 20 kgs/ton
2. Rosin or any sizing agent: 0.5 kgs/ton
3. Krofta or any retention aid: 0.30 kgs/ton
4. Starch or any strengthening agent : 160 kgs/ton
5. Potassium Silicate: 60 kgs/ton
6. Resorcinol Formaldehyde: 6 kgs/ton
7. HCL: 3.5 kgs/ton
8. Pigment: 1.3 kgs/ton

### Aluminum Sulphate Ferric Liquid:

### Specifications

- pH: 4.0 (10% Solution)
- Alumina content: 10.0%
- Specific gravity: 1.28

Alum was dosed at the CRC chest.

### Rosin:

### Specifications

- pH: 12.0
- Solid content: 40%
- Specific gravity: 1.22
Rosin was dosed at the thickener chest.

### Krofta Chemical:

### Specifications

- PH:- 7.0
- Viscosity:- 1450 cps by Brook field Viscometer

### Potato Starch based Dextrin:

Starch gel was added into the process in concentrations of 16% of the total end product weight.

### Method of Preparation of Liquid Starch gel

- Took the 5000 liters of normal water (untreated) in a steam jacketed SS vessel.
- Placed an agitator.
- Added 1200 kgs starch slowly in the vessel with the agitator in ON position.
- Added 22% of gelling solution as a percentage of starch (with continuous stirring).
- The gelling solution is a mix of Potassium Silicate, Resorcinol Formaldehyde, HCL as per mentioned above combination, homogenized with the help of stirrer at 60° Celsius.
- Heated the mixture with the help of steam. Temperature controlled between 40 - 50° for the 1^{st} 30 minutes followed by increasing the temperature between 55 - 65° for the rest of the time period till the mixture got partially gelatinized.

### Specifications of starch

- PH: 7.5 (10% Solution)
- Viscosity: 48 Sec/50 ml
- Moisture: 14%
- Ash: 1.4%
- Acidity: 0.85 ml of 0.1 NaOH solution

The starch gel was dosed into SR box.

### Steam Shower Specifications

- Steam pressure: 6 kg /cm²
- Distance of shower from the wire: 140 mm
- Number of shower: 2
- Number of steam holes : 130

### Paper Machine Section

### Pressure screen:

Operating consistency 1.4% with counter sung hole drilled basket.

### Wire part:

| | **Parts** | **Nos** | **Consistency Inlet (%)** |
|---|---|---|---|
| 1. | Forming Board | 03 | 1.70 |
| 2. | Table rolls | 04 | 2.60 |
| 3. | Hydro foils | 06 | 3.70 |
| 4. | Low vacuum boxes | 02 | 4.70 |
| 5. | Suction boxes | 11 | 12.0 |
| 6. | Suction couch | 01 | 24.0 |

### The resultant Core Board:

The Core Board produced from this process showed following results when 10 samples were checked.
- GSM:: 325 (Minimum 316, Maximum 337)
- Ply bond:: 515 (Minimum 512, Maximum 524)

Tubes of following specifications were made from the Core Board.
- Inner Diameter:: 150 mm
- Outer Diameter:: 180 mm
- Length:: 100 mm
- Weight:: 605 grams

10 samples were checked which gave following results.

### Flat Crush Strength:

206, 188, 192, 198, 201, 200, 192, 190, 196, 201

We manufactured tubes of same specifications from the Kraft Board and Kraft Paper available in the local market.

10 samples were checked which gave following results.

### Flat Crush Strength:

122,112,116,111,117,123,110,111,113,114

## Claims

1. A process for making a core board / cone board / core liner paper, particularly kraft paper, comprising the following steps,
a. Pulping fibres along with water, starch gel and pH adjusting compound in a pulper in a batch process to obtain a pulp;
b. removing the plastic and metal contaminants with water from the pulp in a decontaminator to obtain a first cleansed pulp;
c. stirring the clean pulp in a storage chest maintaining uniform consistency to obtain a first homogenised pulp;
d. passing the first homogenised pulp tangentially through High /Low Density cleaner and through Turbo separator to remove the heavier and lighter impurities and to obtain a second cleansed pulp;
e. stirring the separated pulp in a storage chest and agitating the uniform pulp in a vertical and horizontal Chest agitator to obtain a second homogenised pulp;
f. screening the agitated pulp through primary pressure screen for eliminating sand particles and recover the fibre pulp;
g. screening the rejected pulp in step h through secondary pressure screen remove the unwanted material and recover the fibre pulp;
h. screening the rejected pulp coming from step e and f through a Vibrating Screen to recover the fibre pulp;
i. passing the recovered pulp through thickener with starch gel to dehydrate the pulp stock and increase the consistency and to obtain a thickened pulp;
j. stirring the thickened pulp in a storage chest with a retention aid and a sizing agent maintaining uniform consistency to obtain a uniform pulp;
k. agitating the uniform pulp in a vertical and horizontal Chest agitator to obtain a agitated pulp;
l. passing the agitated pulp through refiner to increase the degree SR of the pulp and to obtain a refined pulp;
m. stirring the refined pulp in a storage chest maintaining uniform consistency to obtain a uniform pulp;
n. agitating the uniform pulp in a vertical and horizontal Chest agitator to obtain a agitated pulp;
o. passing the agitated pulp through Consistency Regulator and Controller (CRC) to control the consistency and maintain the uniform consistency against set point and to obtain a Consistent pulp;
p. stirring the refined pulp in a machine chest maintaining uniform consistency to obtain a uniform pulp;
q. agitating the uniform pulp in a vertical and horizontal Chest agitator to obtain a agitated pulp;
r. passing the agitated pulp through constant level box to maintain constant flow of pulp to fan pump;
s. smoothening the lumps present in the pulp by passing through Medium consistency vertical centrifugal outward flow type pressure screen to obtain a pulp slurry;
t. spreading the pulp slurry evenly on to the wire part consisting of six parts through Head Box to dewater the pulp and to obtain the paper web;
u. pressing the paper web on paper machine through the nip of two rolls running under pressure to obtain the dehydrated and compact wet paper;
v. drying the dehydrated and compact wet paper gradually in drying section with steam shower to obtain the dried paper;
w. Calendaring the dried paper to achieve the surface finish and obtain a uniformly thick paper.

2. A process for making a core board / cone board / core liner paper as claimed in claim 1, wherein the fibres consists of at least one fibrous material selected from a group of fibrous materials consisting of Virgin Wood Pulp, Bamboo pulp, Hardwood, Softwood, Jungle wood, Cotton yarn, Hosiery cutting, wax paper, grease proof paper, rice straw, wheat straw, husk, sawai grass, Bleached pulp, Unbleached pulp, Double Sorted OCC (Old Corrugated Cartons), Recovered Kraft (Old Corrugate Cartons) Paper, Straw Board, Chip Board, Bagasse, Jute pulp, Flax pulp, Hemp pulp, Sisal pulp, Rags (used textiles), Laminated Paper, Tetra pack cartons/sheets pre-use, Tetra pack cartons post-use, New Double Lined Kraft Corrugated Cuttings (NDLK), Brown (Mill Board), Grey board, Carbon paper, Ribbed kraft, Manila paper, Color paper, Road Sweep, Sack kraft, Sand Paper, Tissue Paper, Mix Waste, White Ledger, Computer printouts, Office Record/Paper, Notebooks, Old News Print, Sorted Graphic Paper, White blank, Coated Groundwood, Printed Bleached Board cuttings, Manifold pre-consumer, Coated book stock, Mixed Paper, Box Board Cuttings, Magazines, Hard white envelop cuttings, White woodfree shavings, Hard white shavings, Unprinted Bleached Board, Ledger paper, Security paper, Currency paper, Azure wove Paper, Cheque paper and Bond paper.

3. A process for making a core board / cone board / core liner paper as claimed in claim 1, wherein the water is added to maintain the consistency of the pulp at 2%-30%.

4. A process for making a core board / cone board / core liner paper as claimed in claim 1, wherein the Degree SR (Fiber Freeness) is maintained between 10 and 40 in the pulper for GSM range of more than 250 (Core Board) and between 20 and 55 in the pulper for GSM range of less than 250 (Core Board).

5. A process for making a core board / cone board / core liner paper as claimed in claim 1, wherein the Degree SR (Fiber Freeness) is maintained between 45 and 75 at the Head box for GSM range of more than 250 (Core Board) and between 40 and 80 at the Head box for GSM range of less than 250 (Core Board).

6. A process for making a core board / cone board / core liner paper as claimed in claim 1, wherein the pulping process carried out for the period in the range of 2 minutes to 120 minutes.

7. A process for making a core board / cone board / core liner paper as claimed in claim 1, wherein the pulper consists of at least one pulper selected from a group of pulpers consisting of High Consistency Pulper, Medium Consistency Pulper, Low Consistency pulper, Horizontal pulper, Vertical pulper, Batch type pulper and Continuous pulper.

8. A process for making a core board / cone board / core liner paper as claimed in claim 1, wherein the consistency in storage chest is ranging from 3% to 10%.

9. A process for making a core board / cone board / core liner paper as claimed in claim 1, wherein the storage chest having an agitator consisting of aerofoil type propellers.

10. A process for making a core board / cone board / core liner paper as claimed in claim 1, wherein screening using Primary Pressure screen done at operating consistency up to 5%.

11. A process for making a core board / cone board / core liner paper as claimed in claim 1, wherein thickening done Input consistency of up to 3.0% and output consistency of up to 7.0%.

12. A process for making a core board / cone board / core liner paper as claimed in claim 1, wherein the starch gel consists of mixture made by mixing at least two compounds selected from a group of compounds consisting of Starch, Silicates including Magnesium silicate, Sodium silicate, calcium silicate, Potassium Silicate, Urea, Melamine Formaldehyde, Resorcinol Formaldehyde, Sodium Benzoate, HCL, Eco gel solution, Defoaming agents (Formaldehyde , Aluminum stearate, n-Butoxypolyoxyethylene polyoxypropylene glycol, Butyl stearate, Copolymer condensates of ethylene oxide and propylene oxide, Cottonseed & soybean fatty acids, Decanoic Acid, Dimethylpolysiloxane, polyoxyethylene 40 monostearate, Polysorbate 60, propylene glycol alginate, silicon dioxide, sorbitan monostearate, aluminum stearate, butyl stearate, BHA, BHT, calcium stearate, fatty acids, hydroxylated lecithin, isopropyl alcohol, magnesium stearate, mineral oil, petrolatum, Petroleum waxes, Oxystearin, Polyethylene glycol, Polyoxyethylene (600) dioleate, Polyoxyethylene (600) mono-ricinoleate, potassium stearate, propylene glycol mono & diesters of fats and fatty acids, tallow - hydrogenated, oxidized, or sulfated; hydrogenated tallow alcohol. n-Butoxypolyoxyethylene, polyoxypropylene glycol formaldehyde, sodium polyacrylate, synthetic petroleum wax, oleic acid from tall oil fatty acids, Ethylene oxide polymer, alkyl adduct, phosphate ester, a-Hydro-omega-hydroxy-poly (oxyethylene) poly (oxypropy lene) (minimum 15 moles) poly (oxyethylene) block co-polymers, Hydroxylated lecithin, Isopropanol, isopropyl alcohol, Magnesium stearate, Monoester of alpha -hydro - omega -hydroxy -poly (oxyethylene)poly (oxypropylene) poly (oxyethylene) ((minimum 15 moles) blocked copolymer derived from low erucic acid rapeseed oil, Oleic acid, Palmitic acid, Polyethylene glycol, Polyoxyethylene (40) monostearate, Polypropylene glycol (Molecular weight 1200-3000), Polysorbate 60 (Polyoxyethylene (20) sorbitan mono-stearate), Polysorbate 65 (Polyoxyethylene (20) sorbitan tristearate), Polysorbate 80 (Polyoxyethylene (20) sorbitan monooleate), Silicon dioxide, Sorbitan monostearate, Tallow, hydrogenated, oxidized or sulfated), deaerators (Ethylene oxide polymer, alkyl adduct, phosphate ester, Fatty acids, Formaldehyde (paraformaldehyde), a-Hydro-omega-hydroxy-poly (oxyethylene) poly (oxypropy lene) (minimum 15 moles) poly (oxyethylene) block co-polymers, Hydroxylated lecithin, Isopropanol, isopropyl alcohol, Lecithin, hydroxylated lecithin, Magnesium stearate, Petroleum hydrocarbons (Synthetic isoparaffinic), Petroleum hydrocarbons, odorless, light, Polyethylene glycol (400) dioleate, Polypropylene glycol (Molecular weight 1200-3000), Polysorbate 65 (Polyoxyethylene (20) sorbitan tristearate), Polysorbate 80 (Polyoxyethylene (20) sorbitan monooleate), Polysorbate 80 (Polyoxyethylene (20) sorbitan monooleate), Soybean oil fatty acids, hydroxylated), Aqueous Emulsions(Ethoxylated mono- and di- glycerides), Synthetic Oils(Polyalpha-olefin, Synthetic esters), Mineral Oils (white Mineral oil), Dyes(Acridine , Anthraquinone , Arylmethane , Azo ,Diazonium, Nitro , Nitroso, Phthalocyanine, Quinone-Imine, Tetrazolium, Thiazole, Xanthene), Pigments (Alizarin, Alizarin Crimson, Gamboge, Indigo, Indian Yellow, Cochineal Red, Tyrian Purple, Rose madder, Carbon pigments: Carbon Black, Ivory Black, Vine Black, Lamp Black, Cadmium pigments: cadmium pigments, Cadmium Green, Cadmium Red, Cadmium Yellow, Cadmium Orange, Iron oxide pigments: Caput Mortuum, oxide red, Red Ochre, Sanguine, Venetian Red, Mars Black, Chromium pigments: Chrome Green, Chrome Yellow, Cobalt pigments: Cobalt Blue, Cerulean Blue, Cobalt Violet, Aureolin, Lead pigments: lead white, Naples yellow, Cremnitz White, red lead, Copper pigments: Paris Green, Verdigris, Viridian, Titanium pigments: Titanium White, Titanium Beige, Ultramarine pigments: Ultramarine, Ultramarine Green Shade, French Ultramarine, Mercury pigments: Vermilion, Zinc pigments: Zinc White, Clay earth pigments: Raw Sienna, Burnt Sienna, Raw Umber, Burnt Umber, Yellow Ochre, Organic: Pigment Red 170, Phthalo Green, Phthalo Blue, Prussian blue, Quinacridone Magenta.), Potato, Corn, Guar gum, Tapioca, Wheat, Rice, Cassava, Sago, Tamarind seed, British gums (a brownish substance, very soluble in cold water, formed by heating dry starch at a temperature of about 600°F. It corresponds, in its properties, to dextrin, and is used, in solution, as a substitute for gum in stiffening goods), Casein, Acrylic based Synthetic Adhesive, Polyvinyl Acetate, Dextrin, cationic polymers(polyaminoalkyl (meth)acrylate, polyvinylpyridinium halide, polydiallylammonium halide; reacted polymers, such as polyaminomethyl acrylamide, polyvinylimidazoline, chitosan; and condensation polymers, such as ionenes, epoxyamines), Polyvinylamine, Vegetable gums(chelated agar, gum arabic and microcrystalline cellulose, gum arabic (acacia gum), guar gum (guar flour), agar (agar-agar), carrageenan gum (alpha, kappa and all other types), karaya gum (sterculia gum; India tragacanth, kadaya gum), gum ghatti, locust agar, algin, pectin, xanthan gum, locust bean gum, gum tragacanth, tamarind gum, pectin derivatives including both low- and high-methoxyl pectin; alginates such as propylene glycol alginate; cellulose derivatives such as microcrystalline cellulose, methylcellulose, sodium carboxymethyl cellulose, carboxymethylcellulose, hydroxypropyl cellulose, hydroxypropyl methyl cellulose, and sodium hydroxymethyl cellulose; carboxymethyl locust bean gum; gellan gum; carboxymethyl guar gum), Locust bean gum, Polyacrylamide Resins, Polyvinylformamide (PVF) / Polyvinylamine Resins (PVAm), Melamine-Formaldehyde Resins, Urea-Formaldehyde Resins, Epoxidised Polyamide Resins, Glyoxalated Polyacrylamide Resins, Polyethylenimine (PEI), Polyvinylamines, Polyisocyanate, and Dialdehyde starch.

13. A process for making a core board / cone board / core liner paper as claimed in claim 1, wherein the mass of Starch gel ranges from 5% to 35%.

14. A process for making a core board / cone board / core liner paper as claimed in claim 1,
wherein the process for making starch gel, comprising the following steps,
a. Adding predetermined amount of starch and water in a steam jacketed SS vessel having an agitator and agitating to obtain homogenized starch solution;
b. Adding 5%-30% of gelling solution in homogenized starch solution with continuous stirring to obtain a starch gel solution;
c. Heating the starch gel solution at the temperature between 40 - 50 °C for 30 minutes followed by increasing the temperature between 55 - 65° till the mixture gets partially gelatinized.
d. The gelling solution is a mix of 200-800 kgs of Silicates, 5-30 kgs of strengthening agent like Urea, 5-35 kgs of Formalin, 0.5-12 kgs of HCL homogenized with the help of stirrer at 30-65° Celsius.

15. A process for making a core board / cone board / core liner paper as claimed in claim 14, wherein the gelling solution consists of at least two compounds selected from a group of compounds consisting of Silicates, strengthening agent (Alkline solution of Sodium Silicate Ratio 1:2.05 (Na2o : Sio2)), urea, Formalin and HCL.

16. A process for making a core board / cone board / core liner paper as claimed in claim 14, wherein the gelling solution preferably consists of 200-800 kgs Silicates, 5-30 kgs strengthening agent, 5-35 kgs Formalin and 0.5-12 kgs HCL.

17. A process for making a core board / cone board / core liner paper as claimed in claim 1, wherein the pH adjusting compound consists of at least one compound selected from a group of compounds consisting of Aluminum Sulphate Ferric Liquid, Rosin, Calcium carbonate, and Caustic soda.

18. A process for making a core board / cone board / core liner paper as claimed in claim 1, wherein the retention aid is Krofta.

19. A process for making a core board / cone board / core liner paper as claimed in claim 1, wherein the sizing agent is Rosin.
